# EUROPEAN PATENT SPECIFICATION

(11) **EP 3 732 067 B1**
(45) Date of publication and mention of the grant of the patent: **02.04.2025**
(21) Application number: 18845476.3
(22) Date of filing: 21.12.2018
(51) Int. Cl.: B60C 23/04, B29D 30/00

(54) **TYRE FOR VEHICLE WHEELS COMPRISING AN ANCHORING ELEMENT OF AN OBJECT TO AN INNER SURFACE OF THE TYRE AND PROCESS FOR PRODUCING SAID TYRE**
REIFEN FÜR FAHRZEUGRÄDER MIT EINEM VERANKERUNGSELEMENT EINES GEGENSTANDES AN EINER INNENFLÄCHE DES REIFENS UND VERFAHREN ZUR HERSTELLUNG DES REIFENS
PNEU POUR ROUES DE VÉHICULE COMPRENANT UN ÉLÉMENT D'ANCRAGE D'UN OBJET SUR UNE SURFACE INTERNE DU PNEU ET PROCÉDÉ DE FABRICATION DUDIT PNEU

(30) Priority: 29.12.2017 IT 201700151306
(43) Date of publication of application: 04.11.2020
(73) Proprietor: Pirelli Tyre S.p.A., 20126 Milano (IT)
(72) Inventor: MONTEROSSO, Antonio, 20126 Milano (IT); DE CANCELLIS, Pierluigi, 20126 Milano (IT); CIANCIO, Antonio, 20126 Milano (IT)
(74) Representative: Porta & Consulenti Associati S.p.A.
(86) International application number: PCT/IB2018/060526
(87) International publication number: WO 2019/130197

(56) References cited:
- EP-A1- 1 798 074
- EP-A1- 2 777 958
- US-A1- 2017 232 806
- US-A1- 2017 259 630

## Description

### Field of the invention

The present invention relates to a tyre for vehicle wheels comprising an anchoring element of an object to an inner surface of the tyre and to a process for producing said tyre.

More particularly, the present invention relates to a tyre for vehicle wheels comprising an inner surface and at least one anchoring element configured to fasten an object to the aforementioned inner surface, wherein the anchoring element is at least partially incorporated in a first portion of the tyre defining the inner surface and is accessible from the latter.

The invention also relates to an assembly group in a tyre for vehicle wheels of an anchoring element configured to fasten an object to the inner surface of the tyre.

### State of the Art

For some types of tyres, especially those for which particular performance is required, technological developments have been taking place for some time having the purpose of managing to arrange objects having various functions on an inner circumferential surface of the tyre so that such objects are fixed to the tyre in the most secure way possible.

Thus, for example, for tyres having high-level performance (so-called UHP or Ultra High Performance), monitoring devices have been studied for some time, which, mounted inside said tyres, will have the task of detecting characteristic entities of the tyre, so as to allow a control substantially in real time of the operation and of the conditions of the tyre itself.

Such monitoring devices will periodically communicate with the instrumentation available on-board the vehicle, so that all the relevant information can be supplied to the driver and/or to the vehicle control systems, for example to better activate or regulate alarm and/or control systems of the vehicle dynamics, of the braking, etc.

The monitoring devices for tyres typically comprise an electronic unit and an anchoring device such as for example described in WO 99/041093.

The electronic unit comprises at least one sensor (for example a temperature sensor, a pressure sensor, a sensor capable of measuring/identifying the deformations undergone by the tyre during rolling, such as for example an accelerometer, a strain gauge, etc.) and a transmission system, for sending the data detected by said at least one sensor to a receiver unit arranged on the vehicle.

The anchoring device has the task of keeping the electronic unit attached to the tyre. In particular, in order to be able to identify and measure the deformations undergone by the tyre and estimate, from said deformations, some parameters (for example the length of the ground contacting area, the load acting on the tyre, the angular speed, the friction between the tyre and the rolling surface, the wear of the tyre, etc.), it may be advantageous to fasten one or more monitoring devices on the inner surface of the tyre, for example on the portion of inner surface opposite to the tread band.

A basic problem of the anchoring devices is related to the fact that the tyre, particularly at the leading and trailing portions of the ground contacting area, undergoes mechanical stresses which cause significant deformations of the tyre. On the other hand, the casing in which the electronic unit is housed is typically made of a substantially rigid material, in order to protect its content and allow a correct operation of the electronic unit itself.

The fact that the electronic unit (rigid) must remain attached to the inner surface of the tyre (subject to deformation) is a highly critical aspect for the anchoring device: the latter, while being fastened to the inner surface of the tyre, and thus undergoing the same stresses as the tyre, has the task of maintaining a reliable and durable connection with a substantially undeformable object, i.e. the casing of the electronic unit.

In this concern, U.S. patent application US 2012/0024439 proposed a technology for fastening an object to an inner surface of the tyre that is said being capable of imparting a high engagement force essentially free of variations either as a function of the position within the tyre and from tyre to tyre.

According to this document, by means of this fastening technology the force by which the object is held on the inner surface of the tyre would minimally decrease over time even in extreme usage conditions such as for example at high speeds and at relatively elevated operating temperatures.

In particular, the fastening technology proposed by US 2012/0024439 provides to fix a first fastening element to an inner surface of the tyre, said first fastening element comprising at least two parts mechanically connected to one another and between which a tyre component is sandwiched, said tyre component consisting of a rubber compound possibly incorporating reinforcing elements, for example a portion of the liner or of a carcass layer, which is partially perforated as schematically illustrated in figures 4A and 4B of this document.

Such a first fastening element is fixed to the inner surface of the tyre during the vulcanization operations by means of which the tyre component is joined to the remaining parts of the tyre itself.

In order to avoid possible damages following repeated rotation cycles of the tyre, US 2012/0024439 suggests that the maximum size of the first fastening element should not exceed 12 mm.

EP 1 798 074 discloses that in a pneumatic tire on which a transponder is mounted, a securing member for securing the transponder is fixed to an inner surface of the tire in an area between a tire maximum-width position and a bead toe. In an embodiment, the securing member has a female screw and is arranged in a manner that the securing member abuts a top surface of the inner liner. An upper part thereof is covered with a patch adhered to the inner liner. Alternatively, the patch is buried in a way that the inner surface of the tire and a point of a screw portion of the securing member are substantially on the same plane in a tire vulcanization step.

EP 2 777 958 discloses an elastomeric encasement comprising a rubber patch containing a cavity to releasably hold a device for use in assisting operation of a pneumatic tire. The cavity is configured with an opening to facilitate inserting the device into and removing the device from the cavity. The elastomeric encasement comprises an uncured or partially cured rubber composition. Also, an assembly comprising the elastomeric encasement and at least a portion of the device within the cavity is disclosed, as well as a pneumatic rubber tire containing the elastomeric encasement or the assembly as a co-cured, integral, component of the tire.

US 2017/0232806 discloses a pneumatic tire which includes a mechanical fastener formed of at least two or more fastener components and attached to a tire inner surface. In such a pneumatic tire, the two or more fastener components of the mechanical fastener are fixed with a resin reinforcement member sandwiched therebetween, the resin reinforcement member including at least one layer of a resin film or resin sheet including any of: (a) a resin or a resin composition made of a blend of resin and an elastomer; (b) a resin or a resin composition made of a blend of a resin and an elastomer including arranged fibers; and (c) a resin or a resin composition made of a blend of a resin and an elastomer with short fibers compounded therein.

US 2017/0259630 discloses a pneumatic tire which comprises: a fastener disposed on a tire inner surface, the mechanical fastener being a first mechanical fastener of a separatable pair of mechanical fasteners composed of at least two fastener members; wherein a) the fastener members sandwich a rubber-coated fiber reinforced member and fix together; b) the fastener is disposed within a region such that the following relationship is satisfied: 0.05≦A/H≦0.4, where A is a height in a tire radial direction from a bead toe end to a center position (C) of the fastener, and H is a height of a cross section of the tire; and c) the fiber reinforced member includes fiber bundles disposed in alignment in at least one direction, and forms an angle (minor angle θ) with a tire circumferential direction such that: 30 degrees ≦ θ ≦ 90 degrees.

### Summary of the invention

The Applicant has observed that the fastening technology proposed by US 2012/0024439 may have some drawbacks and technological and functional limitations.

This technology, in fact, provides for mechanically associating the two parts of the first fastening element by interposing therebetween a tyre component that is inevitably perforated in one or more positions with possible structural damage thereto.

This perforating/cutting action of the elastomeric material of the green tyre component can however cause microcracks in the vulcanization step that can over time jeopardize the anchoring force of the object to the inner surface of the tyre with possible undesired detachments thereof particularly in extreme usage conditions such as for example at high speeds and at high operating temperatures.

In particular, the Applicant has observed that the risk of the possible formation of microcracks is increased both by the fact that the first fastening element is assembled on the tyre component in green state, and by the fact that during the vulcanization step of the tyre very high pressures are applied on the tyre component that is mechanically "pinched" by the first fastening element.

Secondly, with the fixing technology proposed by US 2012/0024439 which provides, in order to avoid possible damages as a consequence of repeated rotation cycles of the tyre, to limit the maximum size of the first fastening element below the value of about 12 mm, there is a limitation of the size and weight of the object that can be applied to the first fastening element without running the risk of undesired detachments.

The Applicant has therefore afforded the problem of devising an anchoring technology of an object, for example an electronic unit, to the inner surface of the tyre (and particularly to the portion of inner surface opposite to the tread band), capable of reducing to the minimum and, preferably avoiding, possible undesired detachments of the object particularly in extreme use conditions such as for example at high speeds and at high operating temperatures of the tyre.

The Applicant found that such a problem can be solved by a tyre obtained by co-vulcanizing a green tyre and an assembly group of an anchoring element of an object, said assembly group being suitably configured and applied on the green tyre, preferably on the radially innermost tyre component, before carrying out the vulcanization operations.

More particularly, the Applicant has found that by adopting a configuration of the aforementioned assembly group in which the anchoring element is made as a single unit, interposed between a first supporting sheet and a second covering sheet, each sheet comprising at least one layer comprising a vulcanizable polymer, it is advantageously possible to integrate the anchoring element in the tyre by vulcanization, substantially completely eliminating the risks of a mechanical damage of the tyre.

In a first aspect, therefore, the present invention relates to a tyre for vehicle wheels with the features of claim 1, a tyre with the features of claim 2 or a tyre with the features of claim 3.

In a second aspect thereof, the present invention relates to an assembly group in a tyre for vehicle wheels with the features of claim 13, an assembly group with the features of claim 14 or an assembly group with the features of claim 15.

In a third aspect thereof, the present invention relates to a process for producing a tyre for vehicle wheels according to claim 25.

The Applicant has found that thanks to the configuration of the assembly group described above, in which the anchoring element is made as a single unit, interposed between a first supporting sheet and a second covering sheet, each sheet comprising at least one layer comprising a vulcanizable polymer, it is possible to obviate to the drawbacks of the fastening technology proposed by US 2012/0024439 fully exploiting the advantages of integrating the assembly group with the finished tyre by means of vulcanization.

This, by means of an anchoring element having a simplified structure and formed, in use, by a single unit, preferably formed in one piece as a single unit, and devoid of parts mechanically interacting with each other and with an interposed vulcanizable polymeric material.

In particular and contrary to what is foreseen by US 2012/0024439, the configuration of the assembly group of the invention with the anchoring element enclosed between two sheets comprising a vulcanizable polymer allows to safeguard the structural integrity and not to exert any perforating or cutting action on the green polymeric material.

The configuration of the assembly group of the invention with the anchoring element enclosed between two sheets comprising a vulcanizable polymer also allows to avoid the limitations associated to the reduced transversal extension of the first fastening element disclosed by document US 2012/0024439 that, as stated above, does not exceed the value of 12 mm.

To the contrary, differently from what is foreseen by document US 2012/0024439, the transversal extension of the anchoring element and particularly that of the coupling portion transversely projecting from the base of the central body and that is in contact with the vulcanized elastomeric material of the tyre, is suitably determined so as to have a high overall contact surface between the coupling portion of the central body of the anchoring element and, on one side, the first portion of the tyre defining the inner surface of the tyre and, on the other side, the second portion of the tyre radially outer with respect to said first portion.

Thanks to this feature of superficial interaction carried out by the coupling portion, it is therefore advantageously possible to achieve an effective holding action of the anchoring element within the tyre without resorting to any mechanical interaction of parts as is required by document US 2012/0024439.

Advantageously, furthermore, this technical effect can be achieved in a relatively simple and cost-effective manner by configuring and by suitably dimensioning the coupling portion of the central body transversely projecting from the base of the body of the anchoring element, whereas the first fastening element described by document US 2012/0024439 has a base of its central body that not only has a limited extension (maximum 12 mm), but it is also devoid of any anchoring element projecting therefrom.

In this way, it is also advantageously possible to increase the size and weight of the object that can be fixed to the anchoring element without running the risk of undesired detachments of the object and, this, even in extreme use conditions such as for example at high speeds and at high operating temperatures of the tyre.

Within the framework of the present description and of the following claims, all numbers indicating amounts, parameters, percentages, and so forth should be considered to be preceded in all circumstances by the term "about" unless otherwise indicated. Also, all the ranges of numerical entities include all the possible combinations of the maximum and minimum numerical values and all the possible intermediate ranges therein, in addition to those specifically indicated hereinbelow

Within the framework of the present description and of the following claims, the term "phr" (acronym of parts per hundred rubber) indicates the parts by weight of a given component of elastomeric compound per 100 parts by weight of the elastomeric polymer considered net of possible plasticizing extension oils.

Where not otherwise indicated, all the percentages are expressed as percentages by weight.

The present invention, in one or more of the aforementioned aspects, may have one or more of the preferred features disclosed hereinafter, which can be combined as desired according to the application requirements.

Preferably, the anchoring element is configured to removably fasten an object to the inner surface of the tyre, so as to allow the replacement of the object in the case of failures or breaking.

Preferably, the anchoring element is totally incorporated in the tyre and, even more preferably, is incorporated in the aforementioned first portion of the tyre defining the inner surface of the tyre itself.

In this way, it is advantageously possible to have an anchoring element devoid of portions projecting from the inner surface of the tyre.

Preferably, the anchoring element is made of a suitable structural material for this type of application and which could be easily selected by those skilled in the art, such as for example temperature-resistant plastic or metallic material.

In a preferred embodiment, the anchoring element is made of a material selected from aliphatic polyamides (nylon), aromatic polyamides (aramids), PVC, polyesters (for example polyethylene terephthalate (PET), polyethylene naphthalate (PEN), polyvinyl alcohol (PVA)), and brass. More preferably, the anchoring element is made of nylon 6 or nylon 6,6.

Preferably, the aforementioned at least one coupling portion transversely projecting from the base of the central body of the anchoring element comprises a ring-shaped coupling portion perimetrally projecting from the base of the central body.

In this way, it is advantageously possible to have an adequate overall contact surface between the coupling portion of the central body of the anchoring element and the adjacent elastomeric material, in other words, on one side, the first portion of the tyre defining the inner surface of the tyre and, on the other side, the second portion of the tyre radially outer with respect to said first portion.

In an alternative preferred embodiment, the anchoring element comprises a plurality of coupling portions of the central body substantially fin-shaped and transversely and perimetrally projecting from the base of the central body of the anchoring element.

In this way, it is possible to achieve the following advantageous technical effects:
- increasing the overall contact surface between the coupling portion of the central body of the anchoring element and the adjacent elastomeric material with an advantageous corresponding increase of the holding force of the anchoring element incorporated in the tyre; and
- imparting a greater flexibility to the anchoring element so as to follow in an optimal way the stresses caused by the tyre rolling.

In preferred embodiments, the number of fins can vary between 2 and 20, more preferably between 4 and 12 as a function of the adhesion features between the anchoring element and the elastomeric material and as a function of the size of the anchoring element.

In a preferred embodiment, the base of the body of the anchoring element can be at least partially opened at the bottom of the housing seat of the object.

In this way, it is advantageously possible to increase the integration between the anchoring element and the adjacent elastomeric material with an advantageous corresponding increase of the holding force of the anchoring element incorporated in the tyre.

In a preferred embodiment, the aforementioned ring-shaped coupling portion or the aforementioned substantially fin-shaped coupling portions are tapered, in other words they have a thickness which decreases moving away from the central body of the anchoring element.

In this way, it is advantageously possible to ensure a continuous contact without interruption between the coupling portion of the central body of the anchoring element and the adjacent elastomeric material avoiding the formation of empty areas and with an advantageous increase of the contact surface between the coupling portion and the elastomeric material and, along therewith, of the holding force of the anchoring element incorporated in the tyre.

In this way, it is also advantageously possible to dampen the concentration of pressure exerted by the vulcanization bladder during the vulcanization step of the tyre, avoiding the generation of defects inside the tyre itself.

In a preferred embodiment, the aforementioned ring-shaped coupling portion or the aforementioned substantially fin-shaped coupling portions of the anchoring element are provided with at least one connection element configured to promote the integration of the ring-shaped coupling portion or of the substantially fin-shaped coupling portions with the first portion of the tyre defining the inner surface of the tyre and/or with the second portion of the tyre radially outer with respect to the first portion.

In this concern, it should be noted that the anchoring element according to the invention can be either incorporated, completely or partially, in the first portion of the tyre defining the inner surface of the tyre, or arranged between the aforementioned first portion of the tyre and the aforementioned radially outer second portion of the tyre, as a function of the ways of making the tyre itself.

In a preferred embodiment, the aforementioned at least one connection element can comprise at least one hole, preferably a through hole, formed in the ring-shaped coupling portion or in the substantially fin-shaped coupling portions transversely projecting from the base of the central body of the anchoring element.

In a further preferred embodiment, the aforementioned at least one connection element can comprise, in the vulcanized tyre, a layer of a cross-linked adhesive composition formed on at least one portion of the outer surface of the ring-shaped coupling portion or of the substantially fin-shaped coupling portions transversely projecting from the base of the central body of the anchoring element.

Conversely, in a preferred embodiment of the assembly group of the invention, the aforementioned at least one connection element can comprise a layer of a cross-linkable adhesive composition formed on at least one portion of the outer surface of the ring-shaped coupling portion or of the substantially fin-shaped coupling portions transversely projecting from the base of the central body of the anchoring element.

In preferred embodiments, the aforementioned cross-linkable adhesive composition can comprise one or more components incorporated in the vulcanizable polymer of the first supporting sheet and/or in the second covering sheet of the assembly group.

In preferred embodiments, the aforementioned cross-linked adhesive composition can be obtained from a cross-linkable adhesive composition selected from: a Resorcinol - Formaldehyde - Latex (RFL) composition, a composition comprising at least a) a rubber latex, at least b) an epoxide and at least c) a polyamine having molecular weight greater than 190 Dalton, comprising at least two amino groups selected from primary amino groups -NH₂ and secondary amino groups -NH-, such as for example described in WO 2014/091429 in the name of the Applicant; a composition comprising a water-soluble modified maleinized polybutadiene and, possibly, a latex, such as for example described in document US 7 067 189 to Performance Fibers, Inc.; an adhesive aqueous emulsion of latex and acrylic resin such as for example described in US 4 472 463 to Goodrich Company; a composition comprising at least a) a rubber latex, at least b) an epoxide and c) a polyfunctionalized amino cross-linking agent, in aqueous dispersion such as for example described in WO 2005/080481 and US 2011/104415 to Diolen Industrial Fibers and EP 2 426 253 to Bridgestone Corp.

In a preferred embodiment, the aforementioned cross-linked adhesive composition is obtained from a cross-linkable adhesive composition of the Resorcinol - Formaldehyde - Latex (RFL) type.

Advantageously, the aforementioned cross-linked adhesive compositions ensure and maintain an excellent adhesion of the anchoring element to the vulcanized elastomeric material of the tyre particularly in the conditions of use thereof and, at the same time, allow to successfully couple materials with such different chemical and mechanical properties such as elastomers, which are very elastic, and the anchoring element made of plastic or metal provided with a higher rigidity.

The aforementioned cross-linkable adhesive compositions can be applied on the anchoring element when making the assembly group and, particularly, on the coupling portion(s) of the central body of the anchoring element in a way known *per se,* for example and preferably by immersion.

In preferred embodiments and in order to further increase the adhesion between the anchoring element and, in particular, between the coupling portions of the central body thereof and the adjacent vulcanizable polymers, it is possible to subject the anchoring element or parts thereof to particular activating pre-treatments of physical or chemical nature, such as for example surface activation with ionizing ray treatments, with plasma, with solvent or pre-treatment with a first activating bath (process in two steps).

This pre-treatment and thanks to the surface pre-activation of the anchoring element, by means of epoxides or isocyanates or other suitable activators, improves in a substantial way the reactivity of the system by means of bonds formation between the pre-treated anchoring element and the cross-linkable adhesive composition, for example the RFL system.

Typically, in order to further reinforce the adhesion of the anchoring element to the adjacent vulcanizable polymers that will cover the anchoring element, it is possible to introduce specific additives in the vulcanizable polymers, called adhesion promoters, generally comprising a methylene donor, such as for example hexamethylenetetramine, and a methylene acceptor, such as for example resorcinol in the RFL system.

During the vulcanization step of the tyre, the cross-linking of these additives allows to obtain a greater adhesivity, more or less high as a function of the type of compound, of promoter, of material constituting the anchoring element and of the possible surface treatments thereof.

In a preferred embodiment, the anchoring element has, at the aforementioned at least one coupling portion of the central body of the anchoring element, a transversal extension comprised between 1.5 and 3 times the transversal extension of the base of the central body.

In this way it is advantageously possible to optimize the overall contact surface and, along therewith, the adhesion between the coupling portion of the central body of the anchoring element and the adjacent elastomeric material, that is, in the tyre, on one side, the first portion of the tyre defining the inner surface of the tyre and, on the other side, the second portion of the tyre radially outer with respect to said first portion.

Preferably, the central body of the anchoring element has a thickness comprised between 4 and 8 mm, more preferably equal to about 7 mm.

In this way, it is possible to achieve the following advantageous technical effects:
- having a structure that is sturdy and capable of withstanding the high stresses which the anchoring element is subjected to during the tyre rolling, especially at high speed;
- achieve an optimal compromise between:
   i) the minimum thickness necessary to realise the first mechanical coupling element configured to cooperate with the second mechanical coupling element associated to the object in the respective housing seat, and
   ii) the maximum thickness that avoids possible damages to the structure of the green tyre during the vulcanization step as a consequence of the pushing action of the bladder against the anchoring element.

Preferably, the anchoring element has, at said at least one coupling portion of the central body, a transversal extension comprised between 40 mm and 50 mm, much greater than the maximum transversal extension (12 mm) of the central body of the first coupling element described by document US 2012/0024439.

Advantageously, this preferred transversal extension allows to achieve the advantageous technical effect of obtaining an optimal compromise between:
- the transversal dimension of the anchoring element, such as not to oppose the tyre rolling; and
- the sturdiness characteristics of the anchoring element, such as to withstand the high rolling stresses, especially those at high speed.

In a preferred embodiment, the aforementioned first and second mechanical coupling element of the anchoring element and of the object are configured to allow a threaded coupling, a bayonet coupling or a snap coupling between said object, or a supporting element of said object, and the anchoring element itself, thereby achieving a removable fastening of the object to the anchoring element.

In a particularly preferred embodiment, the tyre for vehicle wheels and/or the assembly group of the anchoring element according to the invention, comprise a plug removably fastened in the housing seat of said object defined in the central body of the anchoring element.

The aforementioned plug achieves the following advantageous technical effects both during the manufacturing operations of the tyre, and during the use thereof in a usage configuration when no object is fixed to the anchoring element:
i) that of preventing the entry of foreign material (debris, rubber waste, dust, etc.) within the housing seat of the object to be fixed to the anchoring element; and
ii) exerting an abutment action during the forming and vulcanization operations of the green tyre preventing undesired deformations of the body of the anchoring element and, more particularly, of the housing seat of the object.

Preferably, the aforementioned plug is made of any suitable material having characteristics of undeformability at the vulcanization temperatures of the tyre (140-200°C) and, preferably, also features of non-adhesiveness to the materials which constitute the anchoring element and to the elastomeric materials of the supporting and covering sheets of the assembly group.

Preferably, the plug is made of polytetrafluoroethylene (PTFE - Teflon^{®}), a material that has both the aforementioned characteristics.

In a preferred embodiment, the plug is provided with a mechanical coupling element entirely analogous to the second mechanical coupling element described above in relation to the object to be fixed to the anchoring element.

In a preferred embodiment, the tyre for vehicle wheels disclosed herein comprises an object fastened, preferably removably, in the respective housing seat defined in the central body of the anchoring element.

In a preferred embodiment, said object is selected from: a monitoring device including a sensor, a balance weight, a surface fastener element, a body for use of the tyre in "run-flat" conditions, a noise-absorbing electronic/mechanical device.

In a preferred embodiment, the aforementioned at least one anchoring element is at least partially incorporated in the first portion of the tyre in an area of said inner surface opposite to a tread band of the tyre.

In this way, it is advantageously possible - when said object is a monitoring device including a sensor - to identify, measure, for example, the deformations undergone by the tyre during rolling and determine, from said deformations, some useful parameters (for example the length of the ground contacting area, the load acting on the tyre, the angular speed, the friction between the tyre and the rolling surface, the tyre wear, etc.).

In this concern and in relation to this configuration of incorporation of the anchoring element, the Applicant has observed that the anchoring element according to the invention manages to maintain a reliable and durable connection with an object, for example the substantially indeformable casing of a monitoring device, while the object is fastened to the inner surface of the tyre in an area particularly subject to stresses and deformations.

In a preferred embodiment, the aforementioned first portion of the tyre comprises at least one structural element of the tyre among liner, under-liner and carcass structure.

In this case, advantageous features of flexibility of tyre making and of making of the assembly group used in manufacturing the tyre can thus be achieved.

In connection with the vulcanized elastomeric material of the first portion of the tyre defining the inner surface of the tyre and of the second portion of the tyre radially outer with respect to the aforementioned first portion, i.e. with the vulcanizable polymer of the first supporting sheet and of the second covering sheet of the assembly group, disclosed herein, it should be noted that such materials are not particularly critical for the purposes of the present invention.

Such a vulcanized elastomeric material and such a vulcanizable polymer can be provided by means of materials usually used in rubber compounds for tyres.

Typically, the vulcanized elastomeric material comprises a rubber (for example a diene rubber, or a butyl rubber) reinforced with carbon black.

In particularly preferred embodiments, the aforementioned at least one layer comprising a vulcanizable polymer of the first supporting sheet and/or of the second covering sheet comprises a plurality of elongated reinforcing elements.

Preferably, such elongated reinforcing elements can comprise textile or metal cords or filaments.

Preferably, the elongated reinforcing elements are made of one or more of the following textile materials: aramid, rayon, polyester, nylon, lyocell.

The expression "one or more (...) textile materials" encompasses both the case in which a single material is used for all of the filaments or textile cords used in the layer comprising a vulcanizable polymer, or the case in which many materials in mixed filaments or cords are used in the layer comprising a vulcanizable polymer (for example filaments or cords of one material alternated with filaments or cords of another material), or the case in which many materials in hybrid filaments or cords are used in the layer comprising a vulcanizable polymer (for example cords comprising filaments of two different materials).

The elongated reinforcing elements can also be made of or comprise metal filaments or cords (possibly metal/textile hybrids), for example made of steel.

Preferably, the elongated reinforcing elements can be arranged in the layer comprising a vulcanizable polymer of the first supporting sheet and/or of the second covering sheet with a density comprised between 30 threads/dm and 500 threads/dm.

Preferably, the layer comprising a vulcanizable polymer of the first supporting sheet and/or of the second covering sheet of the assembly group has a perimeter without edges and/or portions with small radii of curvature.

Preferably, the layer comprising a vulcanizable polymer of the first supporting sheet and/or of the second covering sheet has a circular or oval shape.

This allows to reduce the occurrence of cracks in the layer due to stress concentration at the edges or in any case at perimeter portions having low radius of curvature. The occurrence of starting points of localized detachments is also reduced.

In general, it may be preferable to provide the layer comprising a vulcanizable polymer of the first supporting sheet and/or of the second covering sheet of the assembly group with a circular or elongated shape (for example oval, substantially rectangular with rounded corners, etc.).

If elongated reinforcing elements are present in the layer comprising a vulcanizable polymer of the first supporting sheet and/or of the second covering sheet of the assembly group, it is preferable that the elongated reinforcing elements be oriented along the circumferential direction of the tyre (i.e. within an angle comprised between about ±25° with respect to the circumferential direction).

This advantageously allows to counteract the stresses, and in particular the shear stresses, which the object is subjected to, for example a monitoring device, preferably removably fastened to the inner surface of the tyre, whenever such an object passes at the leading and/or trailing portion of the tyre ground contacting area.

Advantageously, the presence of the elongated reinforcing elements in the layer comprising a vulcanizable polymer of the first supporting sheet and/or of the second covering sheet of the assembly group, generally allows to increase the anchoring strength of the object to the tyre, by means of a contrasting action to the stresses which synergistically operates together with the bond already achieved by the presence of a co-vulcanization of the supporting and covering sheets of the assembly group with the adjacent portions of the green tyre.

In a particularly preferred embodiment, the second covering sheet of the assembly group is provided with elongated reinforcing elements oriented along the circumferential direction of the tyre.

In this way, it is possible to achieve the following advantageous technical effects:
- effectively keeping the anchoring element anchored to the tyre thanks to the fact that the second covering sheet of the assembly group, once integrated by vulcanization in the tyre, covers and holds the anchoring element in the tyre itself;
- ensuring the integrity of the anchoring element during the tyre rolling, distributing the various strains and stresses which derive from the various deformations caused by the rolling itself, especially at high speeds where the stresses and the forces are extremely intense.

If one or both of the supporting and covering sheets of the assembly group have an elongated shape (for example oval or substantially rectangular), it may be advantageous to apply the assembly group to the inner surface of the green tyre so that a larger dimension of the elongated supporting and covering sheet(s) is substantially arranged according to a circumferential direction of the tyre (i.e. within an angle comprised between about ±25° with respect to the circumferential direction).

In this way, it is advantageously possible to distribute in an optimal manner the shear stresses applied to the anchoring element of the object during the tyre rotation.

It should be noted that the terms "lower" and "upper", i.e. radially outer and radially inner, as used in the present description and in the claims should not be interpreted in any limiting sense, and are used merely for descriptive purposes by means of their usual meaning to distinguish different parts of the objects that are being referred to.

For the purposes of the present invention, the term "circumferential direction" of the tyre is used to indicate a direction oriented according to the rolling direction of the tyre itself.

For the purposes of the present invention, the term "axial direction" of the tyre is meant to indicate a direction parallel to the rotation axis of the tyre.

In preferred embodiments, the second covering sheet of the assembly group can have a transversal dimension smaller than, more preferably equal to or greater than, the transversal dimension of the first supporting sheet.

The Applicant has in particular observed that when the second covering sheet of the assembly group has a transversal dimension greater than the transversal dimension of the first supporting sheet it is advantageously possible to achieve improved features of integration and an improved adhesion force - after vulcanization - between the anchoring element and the adjacent portions of the tyre.

In this case, in fact, the second covering sheet of the assembly group covers the anchoring element and adheres and co-vulcanizes both with the first supporting sheet, and with the axially adjacent parts of the green tyre thereby improving the integration of the anchoring element in the tyre.

Preferably, the first supporting sheet of the assembly group has a thickness comprised between 0.2 and 0.5 mm.

In this way, it is advantageously possible to have an effective adhesion of the assembly group to the desired component of the green tyre, for example to the inner surface of the liner, whilst having a limited thickness which does not influence the performance of the tyre during rotation.

Preferably and as outlined above, the first supporting sheet of the assembly group has any shape suitable for the purpose and, more preferably, is circular or elliptical in shape.

Preferably, the first supporting sheet of the assembly group has a diameter (if it is circular) or a larger dimension (if it is elliptical) comprised between 60 mm and 120 mm.

Preferably, the second covering sheet of the assembly group has a thickness comprised between 0.5 and 1.3 mm.

In this way, it is advantageously possible to have an effective holding and incorporation action of the anchoring element in the tyre while having a limited thickness which does not influence the performance of the tyre during rotation.

Preferably and as outlined above, the second covering sheet of the assembly group has any shape suitable for the purpose and, more preferably, is circular or elliptical in shape.

Preferably, the second covering sheet of the assembly group has a diameter (if it is circular) or a larger dimension (if it is elliptical) comprised between 80 mm and 120 mm.

Preferably, the seat defined in the central body of the anchoring element has a circular cross section.

Preferably, such a seat has an inner diameter comprised between about 18 and about 25 mm.

Preferably, the through opening of the second covering sheet, which as stated above, has a shape substantially mating the shape of the seat defined in the central body of the anchoring element, thus has a circular cross section.

Preferably, such a through opening has a diameter comprised between about 18 and about 25 mm.

In a preferred embodiment, the assembly group has a maximum thickness at the central body of the anchoring element comprised between 4.8 and 8.8 mm.

In this way, it is possible to achieve - once the tyre is assembled and vulcanized - the advantageous technical effects linked to the small size but to the high sturdiness of the anchoring element.

In a preferred embodiment, the assembly group comprises a plug removably fastened in the housing seat of the object defined in the central body of the anchoring element and the process for producing a tyre for vehicle wheels according to the invention comprises the further steps of:
d) removing the plug from the housing seat of the object; and
e) removably fastening the object to the anchoring element at least partially incorporated in the first portion of the tyre.

In this way, it is possible to achieve - once the tyre is assembled and vulcanized - the advantageous technical effects described above and related to the presence of the plug.

Preferably, the tyre according to the present invention comprises a carcass structure, a belt structure and a tread band.

Preferably, the carcass structure comprises at least one carcass ply and at least two annular anchoring structures.

The carcass structure preferably comprises at least one carcass ply having respectively opposite side edges engaged with respective annular anchoring structures, called bead cores, possibly associated to a bead filler. The area of the tyre comprising the bead core and the filler forms a bead structure intended for anchoring the tyre on a corresponding mounting rim.

The carcass structure is usually of the radial type, i.e. the reinforcing elements of the at least one carcass layer are on planes comprising the rotation axis of the tyre and substantially perpendicular to the equatorial plane of the tyre.

Said reinforcing elements generally consist of textile cords, for example rayon, nylon, polyester (for example polyethylene terephthalate (PET) or polyethylene naphthalate (PEN).

The coupling between carcass structure and bead structure can be provided by a second carcass ply applied at an axially outer position with respect to the first carcass ply.

In an embodiment of the tyre each bead structure is associated to the carcass structure by folding back of the opposite side edges of the at least one carcass ply around the annular anchoring structure so as to form the so-called folded-back portions of the carcass.

In tyres for applications on mopeds or scooters or vehicles intended for less demanding use, the belt structure may not be present.

In such tyres, the tread band can be made by winding at least one elongated element on the carcass structure.

In the tyres in which it is present, the belt structure is preferably associated to the carcass structure.

The belt structure can comprise one or more belt layers arranged radially superposed with each other and with respect to the carcass structure, typically having textile and/or metal reinforcing cords incorporated in a layer of elastomeric composition.

Such reinforcing cords may have crossed orientation with respect to a direction of circumferential development of the tyre. The term "circumferential" direction is used to indicate a direction generally facing the direction of tyre rotation.

At least one circumferential reinforcing layer, commonly known as "0° belt", comprising at least one circumferential belt layer axially extending substantially at at least one crown portion, may be applied at a radially outer position with respect to the belt layers.

Such a circumferential reinforcing layer can be present close to the axial ends of the crown of the tyre and/or it can be centrally arranged with respect to the equatorial plane of the tyre along an axial extension greater than or equal to at least 50% of the axial extension of the crown of the tyre.

The reinforcing layer (circumferential belt) may comprise a plurality of textile or metal cords arranged substantially in parallel with each other or at least one elongated element comprising at least one elastomeric material incorporating at least one reinforcing cord arranged to form a plurality of windings arranged according to a substantially zero angle with respect to the equatorial plane of the tyre.

The structure, the constructive, compositional and performance features of the remaining parts of tyres of this type are known *per se* and therefore are not detailed here any further, since they are not necessary to understand the invention, not do they limit the same.

The tyre according to the present invention is suitable for use in automobile, motorcycle and heavy vehicle wheels.

The expression "heavy vehicle", is meant to generally indicate a vehicle belonging to categories M2~M3, N1~N3 and O2~O4 defined in "Consolidated Resolution of the Construction of Vehicles (R.E.3) (1997)", Annex 7, pages 52-59, "Classification and definition of power-driven vehicles and trailers", such as for example lorries, trucks, tractors, buses, vans and other vehicles of this type.

### Brief description of the figures

Additional features and advantages of the invention will become better apparent from the following description of some preferred embodiments thereof, made hereinafter, for indicating and not limiting purposes, with reference to the attached drawings.

Such drawings are schematic and not to scale.

In the drawings:
- figure 1 schematically shows an electronic unit comprising at least one sensor for monitoring tyres;
- figure 2 shows a schematic perspective exploded view of an assembly group according to a first preferred embodiment of the invention;
- figure 3 shows a schematic view, in partial cross section, of a tyre according to a first preferred embodiment of the invention comprising an anchoring element incorporated in a first portion of the tyre defining an inner surface of the tyre and accessible from said inner surface;
- figure 4 shows a schematic perspective view, in partial cross section, of some details of a tyre according to a first preferred embodiment of the invention provided with a monitoring device removably fastened to the anchoring element illustrated in figure 3;
- figure 4A shows an enlarged schematic exploded perspective view, in partial cross section, of some details of the tyre of figure 4;
- figure 4B shows an enlarged schematic exploded perspective view, in partial cross section, of some details of a second preferred embodiment of the tyre according to the invention;
- figures 5A and 5B are as many schematic perspective views of two preferred embodiments of the anchoring element according to the invention.

### Detailed description of the currently preferred embodiments

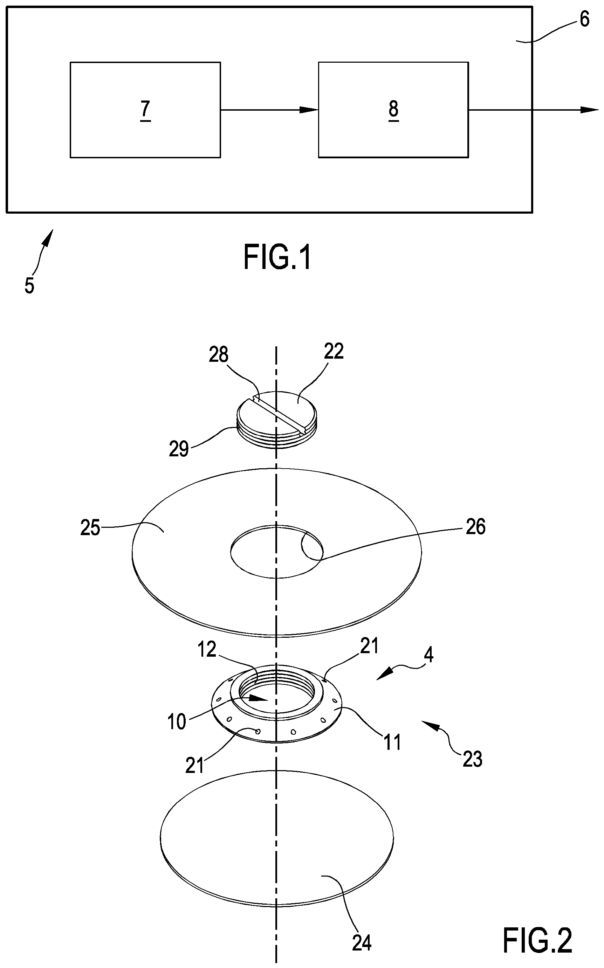

With reference to the attached figures 1-4A, a tyre for vehicle wheels according to a first preferred embodiment of the invention is generally indicated at 1.

The tyre 1 comprises, in a way known *per se* not better shown in the figures, a carcass structure comprising at least one carcass ply having respectively opposite side edges engaged with respective annular anchoring structures, possibly associated to elastomeric fillers, integrated in the areas usually identified with the name of "beads".

The carcass ply preferably comprises a plurality of textile or metal reinforcing cords arranged in parallel with each other and at least partially coated with a layer of elastomeric material.

In a way known *per se,* the carcass structure is associated to a belt structure comprising one or more belt layers, radially arranged superimposed to each other and with respect to the carcass ply having textile or metal reinforcing cords.

At a radially outer position with respect to the belt structure a tread band 2 is applied.

On the lateral surfaces of the carcass structure, each extending from one of the side edges of the tread band 2 up to the respective annular anchoring structure to the beads, respective sidewalls made of elastomeric compound, not better shown in the figures, are also applied at an axially outer position.

A radially inner surface 1a of the tyre 1 is also preferably internally coated by a layer of elastomeric material substantially impermeable to air or so-called "liner" schematically indicated with 3 in the figures.

The liner 3 defines the radially inner surface 1a of the tyre 1.

In the embodiment illustrated in figures 1-4A the tyre 1 is of the type for four-wheeled vehicles.

The tyre 1 described above can be manufactured by means of a production process which uses known processing elements and technologies not illustrated in detail herein.

The tyre 1 comprises at least one anchoring element 4 configured to fasten, preferably in a removable manner, an object to said inner surface 1a.

In the preferred embodiment illustrated in the figures, such an object is for example a monitoring device 5 for tyres of vehicle wheels.

As schematically illustrated in figure 1, the monitoring device 5 comprises an electronic unit 6, adapted to detect at least one characteristic entity of a tyre and to transmit at least one corresponding parameter representative of said detected entity. To this end, the electronic unit 6 may be provided with at least one sensor 7 adapted to detect said at least one characteristic entity, operatively associated to a processing/transmission system 8 of said at least one parameter.

The at least one sensor 7 can be, for example, a temperature sensor, and/or a pressure sensor, and/or a sensor capable of measuring the deformations undergone by the tyre during rolling, such as for example a strain gauge, or an accelerometer, an optical sensor capable of detecting movements, a magnetoresistive sensor, an inertia sensor, a gyroscope, etc..

The processing/transmission system 8, operatively connected to said at least one sensor 7, acquires and processes the data detected by the sensor. Downstream of the processing, the processing/transmission system 8 transmits the characteristic parameter or parameters of the entity to be monitored to the outside of the tyre.

The processing/transmission system 8 preferably comprises a microprocessor, an antenna and other circuitry necessary to carry out a treatment and/or an analysis of the signals coming from the at least one sensor 7, so as to make them suitable for data transmission from the monitoring device 5 towards a receiver arranged on-board a vehicle.

In a preferred embodiment, the data provided by the sensor 7 can be directly processed by the system 8, advantageously provided with a suitable microprocessor or integrated circuit (for example of the ASIC - Application Specific Integrated Circuit type).

The processing/transmission system 8 thus allows a communication with the instruments available on-board the vehicle, for example periodically, so that all the relevant information can be supplied to the driver and/or to a control system of the vehicle, and/or so as to best activate or regulate alarm and/or control systems of the dynamics of the vehicle, of braking etc.

Such communication can be both monodirectional (from the electronic unit 6 to the instruments on-board the vehicle), or bi-directional.

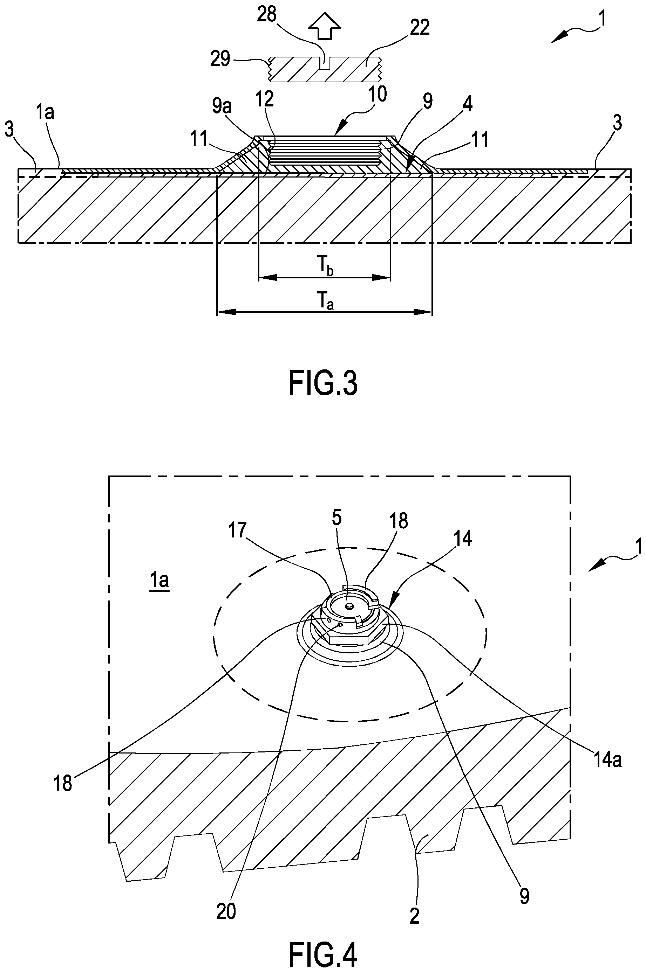

In the preferred embodiment illustrated and as it can be better seen in figures 2 and 3, the anchoring element 4 is completely incorporated in the liner 3 that, in this case, constitutes a first portion of the tyre 1 defining the inner surface 1a.

The anchoring element 4 is accessible from the inner surface 1a of the tyre 1 and comprises:
i) a central body 9 provided with a base 9a,
ii) a seat 10, configured to at least partially house the monitoring device 5, defined in the central body 9, and
iii) at least one coupling portion of the central body 9 to the tyre 1, which coupling portion, in the preferred embodiment illustrated in figures 2 and 3, comprises and, more preferably, consists of, a ring-shaped coupling portion 11 perimetrally projecting from the base 9a of the central body 9.

The seat 10 is provided with a first mechanical coupling element, which in the preferred embodiment illustrated in figures 2 and 3 comprises and, more preferably, consists of an internal threading 12 of the seat 10, configured to cooperate with a second mechanical coupling element associated to the monitoring device 5 so as to removably fasten the monitoring device 5 to the anchoring element 4.

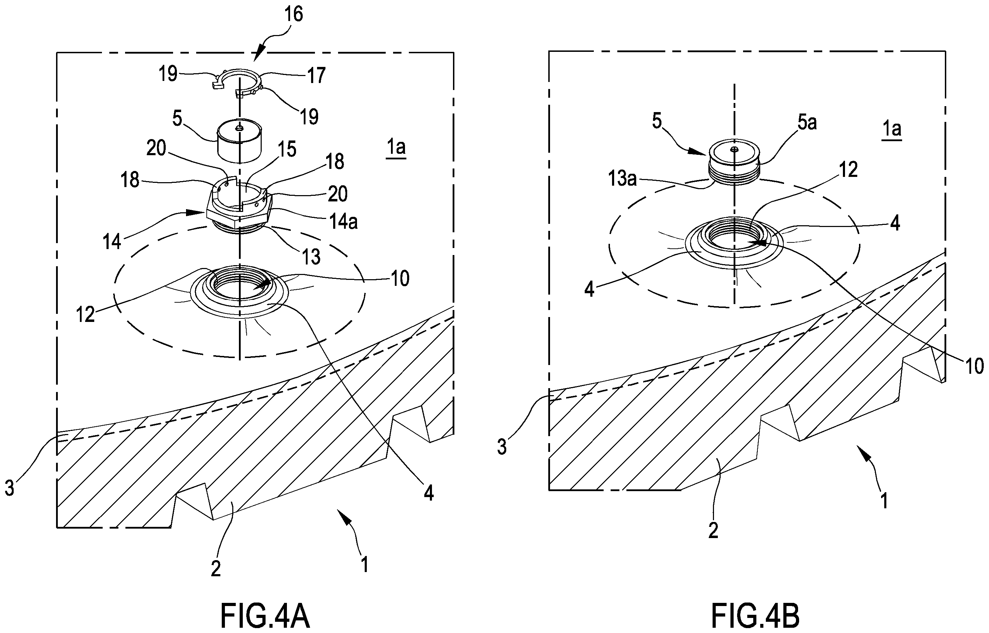

In the preferred embodiment illustrated in figures 4 and 4A, this second mechanical coupling element comprises and, more preferably, consists of an external threading 13 formed in a supporting body 14 of the monitoring device 5.

In the preferred embodiment illustrated, the supporting body 14 of the monitoring device 5 is preferably provided with a substantially hexagon-shaped portion 14a so as to facilitate the screwing operations of the body 14 in the seat 10 for example by means of a wrench.

Preferably, the supporting body 14 is provided with a seat 15 configured to house, preferably with substantial shape coupling, the monitoring device 5 (see figure 4A).

In the preferred embodiment illustrated in figures 4 and 4A, the supporting body 14 is provided with a removable locking device 16 of the monitoring device 5 in the respective housing seat 15, for example comprising an elastic stop ring 17, preferably substantially Ω shaped, cooperating in abutment relationship with a pair of fins 18 axially projecting from the supporting body 14.

Preferably, the elastic stop ring 17 is provided with two pairs of projections, all indicated with 19, each configured to cooperate with respective receiving holes 20, preferably through holes, formed in the fins 18.

The aforementioned ring-shaped coupling portion 11 transversely projects from the base 9a of the central body 9 of the anchoring element 4 and is interposed between and in contact with the liner 3 (the first portion of the tyre defining the inner surface 1a of the tyre 1) and with a second portion of the tyre radially outer with respect to the first portion.

In the preferred embodiment illustrated, both of the aforementioned first and second portions of the tyre 1 are part of the liner 3.

In alternative preferred embodiments, not illustrated, the aforementioned first and second portions of the tyre 1 can be part, for example, of the liner 3 (the radially inner portion) and of a sheet of elastomeric material arranged between the liner 3 and the carcass structure.

In the preferred embodiment illustrated, the ring-shaped coupling portion 11 is tapered (that is, it has a decreasing thickness moving away from the central body 9 of the anchoring element 4), so as to achieve the advantageous technical effects described above.

Preferably, the ring-shaped coupling portion 11 is provided with a plurality of holes 21, preferably through holes, formed in the thickness of the coupling portion 11 and each constituting a connection element configured to promote the integration of the coupling portion 11 of the anchoring element 4 with the adjacent portions of the tyre 1.

Preferably, the connection element 4 comprises a layer of a cross-linked adhesive composition formed on at least one portion of the outer surface of the coupling portion 11 and, more preferably, on the entire outer surface (both lower and upper, that is both radially inner and radially outer) of the coupling portion 11.

As outlined above, such a layer of cross-linked adhesive composition constitutes an additional connection element configured to promote the integration of the coupling portion 11 of the anchoring element 4 with the adjacent portions of the tyre 1.

Preferably, the layer of cross-linked adhesive composition can be obtained from one of the cross-linkable compositions described above, for example from a RFL (Resorcinol-Formaldehyde-Latex) resin system.

Preferably, the anchoring element 4 has, at the coupling portion 11 of the central body 9, a transversal extension Tₐ comprised between 1.5 and 3 times the transversal extension T_{b} of the base 9a of the central body 9 (see figure 3).

In this way, it is possible to achieve the advantageous technical effects described above related to the optimization of the overall contact surface and, along therewith, of the adhesion between the coupling portion 11 of the central body 9 of the anchoring element 4 and the adjacent elastomeric material of the tyre 1.

As outlined above, the anchoring element 4 may have any suitable shape, for example and preferably circular in plan view, so as to facilitate the manufacturing operations.

Preferably, the seat 10 defined in the central body 9 of the anchoring element 4 has a circular cross section and, preferably, has an inner diameter comprised between about 18 and about 25 mm.

Preferably, the anchoring element 4 has a transversal extension Tₐ, that is, a diameter measured at the coupling portion 11, comprised between 40 mm and 50 mm so as to achieve the aforementioned advantageous technical effect of obtaining an optimal compromise between:
- the transversal dimension of the anchoring element 4, such as not to oppose the rolling of the tyre 1; and
- the sturdiness characteristics of the anchoring element 4, such as to withstand the high rolling stresses, especially those at high speed.

Preferably, the central body 9 of the anchoring element 4 has a thickness comprised between 4 and 7 mm so as to achieve the aforementioned advantageous technical effects related to the fact that it has a sufficiently sturdy structure and capable of withstanding the high stresses which the anchoring element 4 is subjected to during the rolling of the tyre 1, especially at high speed and capable of achieving an optimal compromise between:
i) the minimum thickness necessary to make the internal threading 12, configured to cooperate with the external threading 13 of the supporting body 14 of the monitoring device 5, in the seat 10 formed in the anchoring element 4, and
ii) the maximum thickness which avoids possible damages to the structure of the green tyre during the vulcanization step as a consequence of the pushing action of the bladder against the anchoring element 4.

Preferably, the anchoring element 4 is made in one piece of plastics, preferably nylon 6,6.

In a preferred embodiment and as illustrated in figure 3, the tyre 1 comprises a plug 22 removably fastened in the housing seat 10 of the supporting body 14 of the monitoring device 5 defined in the central body 9 of the anchoring element 4.

In this preferred embodiment, the plug 22 is provided with an external threading 29 configured to cooperate in screwing engagement with the internal threading 12 of the seat 10.

Preferably, the plug 22 is provided with a notch 28 for the insertion of a suitable maneuvering tool, for example a screwdriver (not illustrated).

In this preferred embodiment, the plug 22 advantageously prevents that foreign bodies may penetrate into the seat 10 defined in the central body 9 of the anchoring element 4 in the configuration of the tyre 1 in which no object, for example the monitoring device 5, has been fastened yet to the inner surface 1a of the tyre 1.

In a further preferred embodiment and as illustrated in figures 4 and 4A, the tyre 1 comprises the monitoring device 5 supported by the respective supporting body 14, preferably removably fastened in the housing seat 10 defined in the central body 9 of the anchoring element 4.

In the preferred embodiments illustrated in the figures, the anchoring element 4 is incorporated in the liner 3 (first portion of the tyre 1) in an area of the inner surface 1a opposite to the tread band 2 of the tyre 1.

In this way, it is advantageously possible to measure all the forces involved during the operation of the tyre 1 with a minimum equipment.

The tyre 1 according to the preferred embodiments illustrated in figures 3, 4 and 4A, can be produced by means of a process that comprises the steps of:
a) providing an assembly group 23 of the anchoring element 4 configured to fasten an object, for example the monitoring device 5 supported by the respective supporting body 14, to the inner surface 1a of the tyre 1, for example and preferably the assembly group 23 illustrated in figure 2;
b) applying the assembly group 23 on the radially inner surface 1a of a radially inner component of a green tyre, for example on the radially inner surface of the elastomeric material that constitutes the liner 3;
c) subjecting the green tyre thus obtained to vulcanization so as to integrate the assembly group 23 in a first portion of the tyre 1 defining the inner surface 1a of the tyre 1, for example the liner 3, so that the anchoring element 4 of the assembly group 23 is at least partially incorporated in the aforementioned first portion of the tyre 1.

In the preferred embodiment illustrated in figure 2, the assembly group 23 comprises:
a) the anchoring element 4 described above,
b) a first supporting sheet 24 comprising at least one layer comprising a vulcanizable polymer, and
c) a second covering sheet 25, comprising at least one layer comprising a vulcanizable polymer and provided with a through opening 26 having a shape substantially mating the seat 10 defined in the central body 9 of the anchoring element 4.

As better illustrated in figure 2, the anchoring element 4 is arranged between the first supporting sheet 24 and the second covering sheet 25 so as to:
- arrange the seat 10 defined in the central body 9 at the through opening 26 of the second covering sheet 25, and
- arrange the ring-shaped coupling portion 11 transversely projecting from the base 9a of the central body 9 of the anchoring element 4 between and in contact with the first supporting sheet 24 and the second covering sheet 25.

All of this to accomplish a "sandwich" structure as illustrated in figures 2 and 3, the latter figure showing the assembly group 23 already integrated by vulcanization in the structure of the tyre 1.

Preferably and as illustrated in figure 2, the assembly group 23 comprises the plug 22 removably fastened in the housing seat 10 of the monitoring device 5 supported by the respective supporting body 14.

In this way, it is possible to achieve, during the manufacturing operations, in particular during the vulcanization of the tyre 1, the advantageous technical effects described above and related to the possibility of:
i) preventing the entry of foreign material (debris, rubber waste, dust, etc.) into the housing seat 10 of the monitoring device 5 supported by the respective supporting body 14 formed in the anchoring element 4; and
ii) exerting an abutment action during the forming and vulcanization operations of the green tyre preventing undesired deformations of the body 9 of the anchoring element 4 and, more particularly, of the housing seat 10 of the monitoring device 5.

In this preferred embodiment, the process for producing the tyre 1 illustrated in figures 4 and 4A comprises the further steps of:
d) removing the plug 22 from the housing seat 10 of the monitoring device 5; and
e) removably fastening the monitoring device 5 to the anchoring element 4 incorporated in the first portion of the tyre 1, in this case consisting of the liner 3, by screwing the supporting body 14 into the seat 10.

In a preferred embodiment, the aforementioned at least one layer comprising a vulcanizable polymer of the first supporting sheet 24 consists only of cross-linkable elastomeric material and is devoid of any elongated reinforcing elements.

In a preferred embodiment, the aforementioned at least one layer comprising a vulcanizable polymer of the second covering sheet 25 comprises a plurality of elongated reinforcing elements.

Preferably, the aforementioned elongated reinforcing elements comprise textile cords, more preferably, aramid cords.

In a preferred embodiment, the aforementioned reinforcing elements are arranged in the layer comprising a vulcanizable polymer of the second covering sheet 25 with a density comprised between 30 threads/dm and 500 threads/dm.

Preferably, the aforementioned reinforcing elements are oriented along the circumferential direction of the tyre 1 (i.e. within an angle comprised between about ±25° with respect to the circumferential direction) so as to achieve the advantageous technical effects described above and, in particular, that of effectively counteracting the stresses, and particularly the shear stresses, which the monitoring device 5, fastened to the inner surface 1a of the tyre 1 preferably in a removable manner, is subjected to, whenever such a device passes at the leading and/or trailing portion of the ground contacting area of the tyre 1.

In the preferred embodiment illustrated in figure 2, the second covering sheet 25 of the assembly group 23 has a transversal dimension greater than the transversal dimension of the first supporting sheet 24 so as to achieve the improved adhesion characteristics of the anchoring element 4 described above.

Preferably, the first supporting sheet 24 has a thickness comprised between 0.2 and 0.5 mm so as to achieve the advantageous technical effects described above.

Preferably, the second covering sheet 25 has a thickness comprised between 0.5 and 1.3 mm so as to achieve the advantageous technical effects described above.

Preferably, the assembly group 23 has a maximum thickness at the central body 9 of the anchoring element 4 comprised between 4.8 and 8.8 mm so as to achieve the advantageous technical effects described above.

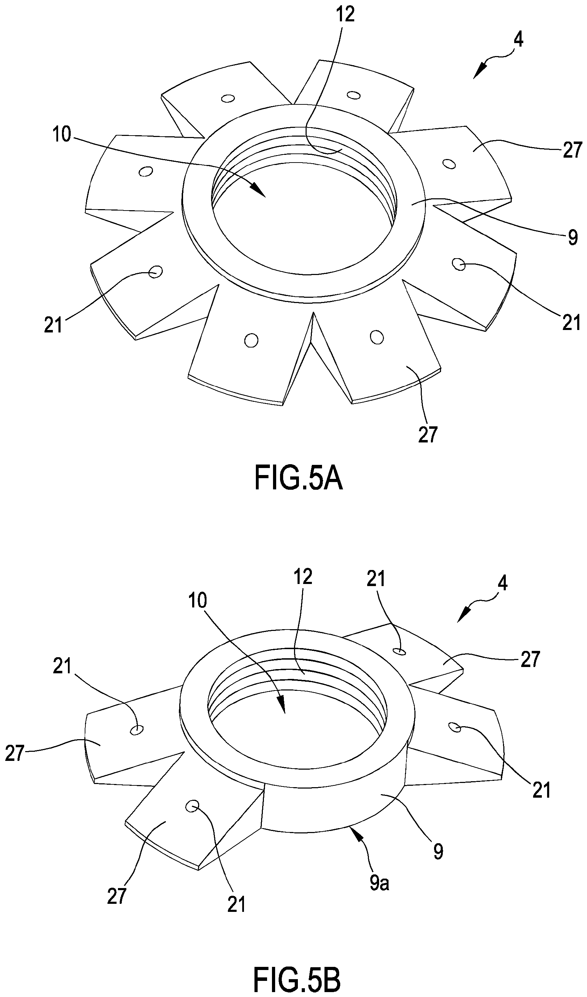

With reference to figures 4B, 5A and 5B further preferred embodiments of the tyre 1 and of the anchoring element 4 according to the invention will now be illustrated.

In the following of the description and in such figures, the elements of the tyre 1 or of the anchoring element 4 which are functionally equivalent to those previously illustrated with reference to the embodiments shown in the previous figures will be indicated with the same reference numerals and will not be further described.

In the preferred embodiment illustrated in figure 4B, the monitoring device 5 is provided with a containment body 5a provided with an externally threaded portion 13a entirely equivalent to the external threading 13 of the supporting body 14 of the monitoring device 5 according to the previous embodiments.

In this preferred embodiment, the externally threaded portion 13a of the containment body 5a therefore constitutes the aforementioned second mechanical coupling element associated to the monitoring device 5 and configured to cooperate in screwing engagement with the internal threading 12 formed in the seat 10 of the anchoring element 4 to removably fasten the monitoring device 5 to such an anchoring element 4 and, therefore, to the inner surface 1a of the tyre 1.

This further preferred embodiment achieves an advantageous reduction in the number of elements necessary to associate the monitoring device 5 to the anchoring element 4 incorporated in the tyre 1, since neither the supporting body 14, nor the elastic stop ring 17 are present.

This results in an advantageous structural simplification and in a related reduction of the production costs of the tyre 1.

In the preferred embodiments illustrated in figures 5A and 5B, the anchoring element 4 comprises a plurality of substantially fin-shaped coupling portions 27 of the central body 9 transversely and perimetrally projecting from the base 9a of the central body 9.

Preferably and similarly to the previously illustrated preferred embodiment of the anchoring element 4, each of the coupling portions 27 is preferably provided with at least one hole 21, preferably a through hole, formed in the thickness of the coupling portions 27 and constituting a connection element configured to promote the integration of the coupling portions 27 of the anchoring element 4 in the adjacent portions of the tyre 1.

In this alternative preferred embodiment, it is advantageously possible to achieve the advantageous technical effects described above and related to an increase both in the overall contact surface between the coupling portions 27 of the central body 9 of the anchoring element 4 and the adjacent elastomeric material, and in the flexibility of the anchoring element 4 which is better capable to optimally withstand the stresses caused by the rolling of the tyre 1.

In the preferred embodiments illustrated in figures 5A and 5B, the number of the coupling portions 27 is respectively 8 and 4, but it can vary, as outlined above, between 2 and 20 as a function of the adhesion characteristics between the anchoring element 4 and the elastomeric material as a function of the size of the anchoring element 4.

Also in this preferred embodiment, the coupling portions 27 are tapered so as to achieve the advantageous technical effects outlined above and related to this feature.

Hereinafter an example of a tyre 1 according to a preferred embodiment of the invention is given, which the Applicant has verified to be resistant at high speed rolling in high-speed integrity tests up to speeds greater than 300 km/h.

Such an Example should be understood to be for illustrative and non-limiting purposes of the invention.

A high-speed integrity test was carried out based on regulation UNECE 30 Rev. 3 - Amendment 2, attachment 7 "Procedure for load/speed tests ".

The test was carried out on tyres of size 295/35 ZR20 XL (105Y), having the configuration schematically shown in figures 4 and 4A. The tyres were inflated to an internal pressure of 3.6 bar.

The test was carried out by rotating the tyre on a drum having a diameter of 2 m under a load of 645 Kg.

The materials used to make the tyre 1 of the test and, in particular, to make the assembly group 23, are indicated hereinafter (all the amounts of elastomeric materials are in phr).
A) Material of the supporting sheet 24: see Table 1

**TABLE 1**

| Ingredient | Amount |
|---|---|
| NR | 100.00 |
| CB standard *tyre grade* | 55.00 |
| Zinc oxide | 5.00 |
| Stearic acid | 1.50 |
| 6 PPD | 1.00 |
| TBBS | 1.50 |
| Vulcanizing agent | 4.50 |
| Adhesion agent - HMMM | 1.90 |
| Adhesion agent - Resorcinol | 1.26 |

| | |
|---|---|
| NR: natural rubber STR 20 - Thaiteck Rubber CB standard *tyre grade*: Carbon black *tyre grade* N326 (Birla Group); Zinc oxide: ZINKWEISS G6P5 Rhein Chemie (Activator); Stearic acid: STEARINSAEURE Undesa 6-PPD: phenyl-p-phenylenediamine (6-PPD-Akzo Nobel) (Antiozonant); TBBS: N-tert-butyl-2-benzothiazole-sulfenamide - Vulkacit^{®} NZ - (Lanxess) (Accelerant); Vulcanizing agent: Insoluble sulfur 67% by weight - Crystex OT 33 AS (Eastman Chemical Company); Adhesion agent - HMMM: hexamethoxymethylmelamine (HMMM) (Cyrez 963, Cytec) Adhesion agent - Resorcinol (Kraeber & Co) Diameter: 60 mm | |

B) Material of the anchoring element 4: nylon 6,6
Coating with cross-linkable adhesive composition of the RFL type
Diameter of the inner seat 10: 24 mm
Transversal extension T_{b} of the supporting body 9: 28 mm
Maximum transversal extension Tₐ of the anchoring element 4: 50 mm

C) Material of the covering sheet 25: see Table 2

**TABLE 2**

| Ingredient | Amount |
|---|---|
| Chlorobutyl Rubber | 50 |
| NR | 50.00 |
| CB standard *tyre grade* | 70.00 |
| Plasticizer oil | 9 |
| Zinc oxide 80% by weight | 5.00 |
| Stearic acid | 2.00 |
| Homogenizing agent | 4.00 |
| 6 PPD | 0.50 |
| TBBS | 1.00 |
| Vulcanizing agent | 1.50 |
| Tackifier resin | 2.00 |
| Adhesion agent - Resorcinol | 1.26 |

| | |
|---|---|
| Chlorobutyl Rubber: CIIR 1066 Exxon Mobil NR: natural rubber STR 20 - Thaiteck Rubber CB standard *tyre grade*: Carbon black *tyre grade* N660 (Birla Group); Plasticizer oil: MES (Mild Extraction Solvate), ENI SPA Zinc oxide 80% by weight: Rhein Chemie (Activator); Stearic acid: STEARINSAEURE Undesa Homogenizing resin: Mixture of hydrocarbon resins STRUKTOL 40 MS (STRUKTOL) 6-PPD: phenyl-p-phenylenediamine (6-PPD-Akzo Nobel) (Antiozonant); TBBS: N-tert-butyl-2-benzothiazole-sulfenamide - Vulkacit^{®} NZ - (Lanxess) (Accelerant); Vulcanizing agent: sulfur (Zolfoindustria); Tackifier resin: aliphatic hydrocarbon resin Escorez 1102 (Exxon Mobil) Diameter: 100 mm Diameter of the opening 26: 24 mm Reinforcing elements: aramid cords 842 dTex, density 100 threads/dm. | |

The speed was increased step-wise with the following profile:
- 1st step: duration 5 minutes; speed: 100 km/h
- 2nd step: duration 10 minutes; speed: 170 km/h
- 3rd step: duration 5 minutes; speed: 180 km/h
- successive steps each lasting 5 minutes progressively increasing the speed by 10 km/h up to the end of the test.

The test ended at the maximum speed of 300 km/h, speed at which the monitoring device 5 stopped working due to overheating thereof, but remaining correctly anchored to the tyre.

## Claims

1. Tyre (1) for vehicle wheels comprising an inner surface (1a) and at least one anchoring element (4) configured to fasten an object (5) to said inner surface (1a),
wherein the anchoring element (4) is at least partially incorporated in a first portion of the tyre (1) defining said inner surface (1a) and is accessible from said inner surface (1a);
wherein the anchoring element (4) comprises:
i) a central body (9), provided with a base (9a),
ii) a seat (10), defined in the central body (9), configured to at least partially house said object (5), said seat (10) being provided with a first mechanical coupling element (12) configured to cooperate with a second mechanical coupling element (13) associated to said object (5) so as to fasten said object (5) to the anchoring element (4);
iii) at least one coupling portion (11; 27) of the central body (9) to the tyre (1), and
wherein said coupling portion (11; 27) transversely projects from the base (9a) of the central body (9) and is interposed between and in contact with said first portion of the tyre (1) defining the inner surface (1a) of the tyre (1) and with a second portion of the tyre (1) radially outer with respect to said first portion,
**characterised in that**
the anchoring element (4) comprises a plurality of coupling portions (27) of the central body (9) substantially fin-shaped and transversely and perimetrally projecting from the base (9a) of the central body (9).

2. Tyre (1) for vehicle wheels comprising an inner surface (1a) and at least one anchoring element (4) configured to fasten an object (5) to said inner surface (1a),
wherein the anchoring element (4) is at least partially incorporated in a first portion of the tyre (1) defining said inner surface (1a) and is accessible from said inner surface (1a);
wherein the anchoring element (4) comprises:
i) a central body (9), provided with a base (9a),
ii) a seat (10), defined in the central body (9), configured to at least partially house said object (5), said seat (10) being provided with a first mechanical coupling element (12) configured to cooperate with a second mechanical coupling element (13) associated to said object (5) so as to fasten said object (5) to the anchoring element (4);
iii) at least one coupling portion (11; 27) of the central body (9) to the tyre (1), and
wherein said coupling portion (11; 27):
i) transversely projects from the base (9a) of the central body (9);
ii) comprises a ring-shaped coupling portion (11) perimetrally projecting from the base (9a) of the central body (9); and
iii) is interposed between and in contact with said first portion of the tyre (1) defining the inner surface (1a) of the tyre (1) and with a second portion of the tyre (1) radially outer with respect to said first portion,
**characterised in that** said ring-shaped coupling portion (11) is tapered.

3. Tyre (1) for vehicle wheels comprising an inner surface (1a) and at least one anchoring element (4) configured to fasten an object (5) to said inner surface (1a),
wherein the anchoring element (4) is at least partially incorporated in a first portion of the tyre (1) defining said inner surface (1a) and is accessible from said inner surface (1a);
wherein the anchoring element (4) comprises:
i) a central body (9), provided with a base (9a),
ii) a seat (10), defined in the central body (9), configured to at least partially house said object (5), said seat (10) being provided with a first mechanical coupling element (12) configured to cooperate with a second mechanical coupling element (13) associated to said object (5) so as to fasten said object (5) to the anchoring element (4);
iii) at least one coupling portion (11; 27) of the central body (9) to the tyre (1), and
wherein said coupling portion (11; 27):
i) transversely projects from the base (9a) of the central body (9);
ii) comprises a ring-shaped coupling portion (11) perimetrally projecting from the base (9a) of the central body (9); and
iii) is interposed between and in contact with said first portion of the tyre (1) defining the inner surface (1a) of the tyre (1) and with a second portion of the tyre (1) radially outer with respect to said first portion,
**characterised in that** said ring-shaped coupling portion (11) of the anchoring element (4) is provided with at least one connection element comprising at least one hole (21), preferably a through hole, formed in said ring-shaped coupling portion (11), and configured to promote the integration of said ring-shaped coupling portion (11) with the first portion of the tyre (1) defining the inner surface (1a) and/or with the second portion of the tyre (1) radially outer with respect to the first portion.

4. Tyre (1) for vehicle wheels according to claim 1, wherein said substantially fin-shaped coupling portions (27) of the anchoring element (4) are tapered.

5. Tyre (1) for vehicle wheels according to claim 1 or 2, wherein said ring-shaped coupling portion (11; 27) or said substantially fin-shaped coupling portions of the anchoring element (4) are provided with at least one connection element configured to promote the integration of said ring-shaped coupling portion (11) or of said substantially fin-shaped coupling portions (27) with the first portion of the tyre (1) defining the inner surface (1a) and/or with the second portion of the tyre (1) radially outer with respect to the first portion.

6. Tyre (1) for vehicle wheels according to claim 5, wherein said at least one connection element comprises at least one hole (21), preferably a through hole, formed in said ring-shaped coupling portion (11) or in said substantially fin-shaped coupling portions (27).

7. Tyre (1) for vehicle wheels according to any one of the preceding claims, wherein the anchoring element (4) has, at said at least one coupling portion (11; 27) of the central body (9), a transversal extension comprised between 1.5 and 3 times the transversal extension of the base (9a) of the central body (9).

8. Tyre (1) for vehicle wheels according to any one of the preceding claims, wherein the central body (9) of the anchoring element (4) has a thickness comprised between 4 and 8 mm.

9. Tyre (1) for vehicle wheels according to any one of the preceding claims, comprising an object (5) fastened in said housing seat (10) of said object (5) defined in the central body (9) of the anchoring element (4).

10. Tyre (1) for vehicle wheels according to any one of the preceding claims, wherein said object (5) is selected from: a monitoring device including a sensor, a balance weight, a surface fastener element, a body for use of the tyre in "run-flat" conditions, a noise-absorbing electronic/mechanical device.

11. Tyre (1) according to any one of the preceding claims, wherein said at least one anchoring element (4) is at least partially incorporated in said first portion of the tyre (1) in an area of said inner surface (1a) opposite to a tread band (2) of the tyre (1).

12. Tyre (1) according to any one of the preceding claims, wherein said first portion of the tyre (1) comprises at least one structural element of the tyre (1) among liner (3), under-liner and carcass structure.

13. Assembly group (23) in a tyre (1) for vehicle wheels of an anchoring element (4) configured to fasten an object (5) to said inner surface (1a) of the tyre (1), wherein the assembly group (23) comprises:
a) an anchoring element (4) configured to be at least partially incorporated in a portion of the tyre (1) defining an inner surface (1a) of the tyre (1), comprising:
a1) a central body (9), provided with a base (9a),
a2) a seat (10), defined in the central body (9), configured to at least partially house said object (5), said seat (10) being provided with a first mechanical coupling element (12) configured to cooperate with a second mechanical coupling element (13) associated to said object (5) so as to fasten said object (5) to the anchoring element (4),
a3) at least one coupling portion (11; 27) of the central body (9) configured to couple said body to the tyre (1), said coupling portion (11; 27) transversely projecting from the base (9a) of the central body (9),
b) a first supporting sheet (24) comprising at least one layer comprising a vulcanizable polymer, and
c) a second covering sheet (25), comprising at least one layer comprising a vulcanizable polymer, said second covering sheet (25) being provided with a through opening (26) having a shape substantially mating the seat (10) defined in the central body (9) of the anchoring element (4),
wherein the anchoring element (4) comprises a plurality of coupling portions (27) of the central body (9) substantially fin-shaped and transversely and perimetrally projecting from the base (9a) of the central body (9), and
wherein the anchoring element (4) is arranged between said first supporting sheet (24) and said second covering sheet (25) so as to:
- arrange the seat (10) defined in the central body (9) at the through opening (26) of the second covering sheet (25), and
- arrange the coupling portion (11; 27) transversely projecting from the base (9a) of the central body (9) between and in contact with the first supporting sheet (24) and the second covering sheet (25).

14. Assembly group (23) in a tyre (1) for vehicle wheels of an anchoring element (4) configured to fasten an object (5) to said inner surface (1a) of the tyre (1), wherein the assembly group (23) comprises:
a) an anchoring element (4) configured to be at least partially incorporated in a portion of the tyre (1) defining an inner surface (1a) of the tyre (1), comprising:
a1) a central body (9), provided with a base (9a),
a2) a seat (10), defined in the central body (9), configured to at least partially house said object (5), said seat (10) being provided with a first mechanical coupling element (12) configured to cooperate with a second mechanical coupling element (13) associated to said object (5) so as to fasten said object (5) to the anchoring element (4),
a3) at least one coupling portion (11; 27) of the central body (9) configured to couple said body to the tyre (1), said coupling portion (11; 27) transversely projecting from the base (9a) of the central body (9),
b) a first supporting sheet (24) comprising at least one layer comprising a vulcanizable polymer, and
c) a second covering sheet (25), comprising at least one layer comprising a vulcanizable polymer, said second covering sheet (25) being provided with a through opening (26) having a shape substantially mating the seat (10) defined in the central body (9) of the anchoring element (4),
wherein said at least one coupling portion (11; 27) transversely projecting from the base (9a) of the central body (9) of the anchoring element (4) comprises a ring-shaped coupling portion (11) perimetrally projecting from the base (9a) of the central body (9),
wherein said ring-shaped coupling portion (11) is tapered, and
wherein the anchoring element (4) is arranged between said first supporting sheet (24) and said second covering sheet (25) so as to:
- arrange the seat (10) defined in the central body (9) at the through opening (26) of the second covering sheet (25), and
- arrange the coupling portion (11; 27) transversely projecting from the base (9a) of the central body (9) between and in contact with the first supporting sheet (24) and the second covering sheet (25).

15. Assembly group (23) in a tyre (1) for vehicle wheels of an anchoring element (4) configured to fasten an object (5) to said inner surface (1a) of the tyre (1), wherein the assembly group (23) comprises:
a) an anchoring element (4) configured to be at least partially incorporated in a portion of the tyre (1) defining an inner surface (1a) of the tyre (1), comprising:
a1) a central body (9), provided with a base (9a),
a2) a seat (10), defined in the central body (9), configured to at least partially house said object (5), said seat (10) being provided with a first mechanical coupling element (12) configured to cooperate with a second mechanical coupling element (13) associated to said object (5) so as to fasten said object (5) to the anchoring element (4),
a3) at least one coupling portion (11; 27) of the central body (9) configured to couple said body to the tyre (1), said coupling portion (11; 27) transversely projecting from the base (9a) of the central body (9),
b) a first supporting sheet (24) comprising at least one layer comprising a vulcanizable polymer, and
c) a second covering sheet (25), comprising at least one layer comprising a vulcanizable polymer, said second covering sheet (25) being provided with a through opening (26) having a shape substantially mating the seat (10) defined in the central body (9) of the anchoring element (4),
wherein said at least one coupling portion (11; 27) transversely projecting from the base (9a) of the central body (9) of the anchoring element (4) comprises a ring-shaped coupling portion (11) perimetrally projecting from the base (9a) of the central body (9),
wherein said ring-shaped coupling portion (11) of the anchoring element (4) is provided with at least one connection element comprising at least one hole (21), preferably a through hole, formed in said ring-shaped coupling portion (11), and configured to promote the integration of said ring-shaped coupling portion (11) with the first portion of the tyre (1) defining the inner surface (1a) and/or with the second portion of the tyre (1) radially outer with respect to the first portion
and
wherein the anchoring element (4) is arranged between said first supporting sheet (24) and said second covering sheet (25) so as to:
- arrange the seat (10) defined in the central body (9) at the through opening (26) of the second covering sheet (25), and
- arrange the coupling portion (11; 27) transversely projecting from the base (9a) of the central body (9) between and in contact with the first supporting sheet (24) and the second covering sheet (25).

16. Assembly group (23) according to claim 13 or 14, wherein said ring-shaped coupling portion (11) or said substantially fin-shaped coupling portions (27) of the anchoring element (4) are provided with at least one connection element configured to promote the integration of said ring-shaped coupling portion (11) or of said substantially fin-shaped coupling portions (27) with the first portion of the tyre (1) defining the inner surface (1a) and/or with the second portion of the tyre (1) radially outer with respect to the first portion.

17. Assembly group (23) according to claim 16, wherein said at least one connection element comprises at least one hole (21), preferably a through hole, formed in said ring-shaped coupling portion (11) or in said substantially fin-shaped coupling portions (27).

18. Assembly group (23) according to claim 13, wherein said substantially fin-shaped coupling portions (27) of the anchoring element (4) are tapered.

19. Assembly group (23) according to any one of claims 13-18, wherein said anchoring element (4) is as defined in any one of claims 7 or 8.

20. Assembly group (23) according to any one of claims 13-19, wherein said at least one layer comprising a vulcanizable polymer of the first supporting sheet (24) and/or of the second covering sheet (25) comprises a plurality of elongated reinforcing elements.

21. Assembly group (23) according to any one of claims 13-20, wherein the second covering sheet (25) has a transversal dimension equal to or greater than the transversal dimension of the first supporting sheet (24).

22. Assembly group (23) according to any one of claims 13-21, wherein the first supporting sheet (24) has a thickness comprised between 0.2 and 0.5 mm.

23. Assembly group (23) according to any one of claims 13-22, wherein the second covering sheet (25) has a thickness comprised between 0.5 and 1.3 mm.

24. Assembly group (23) according to any one of claims 13-23, having a maximum thickness at the central body (9) of the anchoring element (4) comprised between 4.8 and 8.8 mm.

25. Process for producing a tyre (1) for vehicle wheels comprising an anchoring element (4) of an object (5) to an inner surface (1a) thereof according to any one of claims 1-12, wherein the process comprises the steps of:
a) providing an assembly group (23) according to any one of claims 13-24;
b) applying said assembly group (23) on a radially inner surface (1a) of a radially inner component of a green tyre (1);
c) subjecting the green tyre (1) thus obtained to vulcanization so as to integrate the assembly group (23) in a first portion of the tyre defining the inner surface (1a) of the tyre (1) so that the anchoring element (4) of the assembly group (23) is at least partially incorporated in said first portion of the tyre (1).

## Patentansprüche

1. Reifen (1) für Fahrzeugräder, umfassend eine Innenfläche (1a) und mindestens ein Verankerungselement (4), das dazu konfiguriert ist, einen Gegenstand (5) an der Innenfläche (1a) zu befestigen,
wobei das Verankerungselement (4) mindestens teilweise in einen ersten Abschnitt des Reifens (1), der die Innenfläche (1a) definiert, eingearbeitet ist und von der Innenfläche (1a) zugänglich ist;
wobei das Verankerungselement (4) umfasst:
i) einen zentralen Körper (9), der mit einer Basis (9a) bereitgestellt ist,
ii) einen Sitz (10), der in dem zentralen Körper (9) definiert ist und dazu konfiguriert ist, den Gegenstand (5) mindestens teilweise aufzunehmen, wobei der Sitz (10) mit einem ersten mechanischen Kopplungselement (12) bereitgestellt ist, das dazu konfiguriert ist, mit einem zweiten mechanischen Kopplungselement (13) zusammenzuwirken, das mit dem Gegenstand (5) verknüpft ist, um den Gegenstand (5) an dem Verankerungselement (4) zu befestigen;
iii) mindestens einen Kopplungsabschnitt (11; 27) des zentralen Körpers (9) mit dem Reifen (1), und
wobei der Kopplungsabschnitt (11; 27) quer von der Basis (9a) des zentralen Körpers (9) vorsteht und zwischen und in Kontakt mit dem ersten Abschnitt des Reifens (1), der die Innenfläche (1a) des Reifens (1) definiert, und mit einem zweiten Abschnitt des Reifens (1), der in Bezug auf den ersten Abschnitt radial außen angeordnet ist, eingefügt ist,
**dadurch gekennzeichnet, dass**
das Verankerungselement (4) eine Vielzahl von Kopplungsabschnitten (27) des zentralen Körpers (9) umfasst, die im Wesentlichen rippenförmig sind und quer und umlaufend von der Basis (9a) des zentralen Körpers (9) vorstehen.

2. Reifen (1) für Fahrzeugräder, umfassend eine Innenfläche (1a) und mindestens ein Verankerungselement (4), das dazu konfiguriert ist, einen Gegenstand (5) an der Innenfläche (1a) zu befestigen,
wobei das Verankerungselement (4) mindestens teilweise in einen ersten Abschnitt des Reifens (1), der die Innenfläche (1a) definiert, eingearbeitet ist und von der Innenfläche (1a) zugänglich ist;
wobei das Verankerungselement (4) umfasst:
i) einen zentralen Körper (9), der mit einer Basis (9a) bereitgestellt ist,
ii) einen Sitz (10), der in dem zentralen Körper (9) definiert ist und dazu konfiguriert ist, den Gegenstand (5) mindestens teilweise aufzunehmen, wobei der Sitz (10) mit einem ersten mechanischen Kopplungselement (12) bereitgestellt ist, das dazu konfiguriert ist, mit einem zweiten mechanischen Kopplungselement (13) zusammenzuwirken, das mit dem Gegenstand (5) verknüpft ist, um den Gegenstand (5) an dem Verankerungselement (4) zu befestigen;
iii) mindestens einen Kopplungsabschnitt (11; 27) des zentralen Körpers (9) mit dem Reifen (1), und
wobei der Kopplungsabschnitt (11; 27):
i) quer von der Basis (9a) des zentralen Körpers (9) vorsteht;
ii) einen ringförmigen Kopplungsabschnitt (11) umfasst, der umlaufend von der Basis (9a) des zentralen Körpers (9) vorsteht; und
iii) zwischen und in Kontakt mit dem ersten Abschnitt des Reifens (1), der die Innenfläche (1a) des Reifens (1) definiert, und mit einem zweiten Abschnitt des Reifens (1), der in Bezug auf den ersten Abschnitt radial außen angeordnet ist, eingefügt ist,
**dadurch gekennzeichnet, dass** der ringförmige Kopplungsabschnitt (11) verjüngt ist.

3. Reifen (1) für Fahrzeugräder, umfassend eine Innenfläche (1a) und mindestens ein Verankerungselement (4), das dazu konfiguriert ist, einen Gegenstand (5) an der Innenfläche (1a) zu befestigen,
wobei das Verankerungselement (4) mindestens teilweise in einen ersten Abschnitt des Reifens (1), der die Innenfläche (1a) definiert, eingearbeitet ist und von der Innenfläche (1a) zugänglich ist;
wobei das Verankerungselement (4) umfasst:
i) einen zentralen Körper (9), der mit einer Basis (9a) bereitgestellt ist,
ii) einen Sitz (10), der in dem zentralen Körper (9) definiert ist und dazu konfiguriert ist, den Gegenstand (5) mindestens teilweise aufzunehmen, wobei der Sitz (10) mit einem ersten mechanischen Kopplungselement (12) bereitgestellt ist, das dazu konfiguriert ist, mit einem zweiten mechanischen Kopplungselement (13) zusammenzuwirken, das mit dem Gegenstand (5) verknüpft ist, um den Gegenstand (5) an dem Verankerungselement (4) zu befestigen;
iii) mindestens einen Kopplungsabschnitt (11; 27) des zentralen Körpers (9) mit dem Reifen (1), und
wobei der Kopplungsabschnitt (11; 27):
i) quer von der Basis (9a) des zentralen Körpers (9) vorsteht;
ii) einen ringförmigen Kopplungsabschnitt (11) umfasst, der umlaufend von der Basis (9a) des zentralen Körpers (9) vorsteht; und
iii) zwischen und in Kontakt mit dem ersten Abschnitt des Reifens (1), der die Innenfläche (1a) des Reifens (1) definiert, und mit einem zweiten Abschnitt des Reifens (1), der in Bezug auf den ersten Abschnitt radial außen angeordnet ist, eingefügt ist,
**dadurch gekennzeichnet, dass** der ringförmige Kopplungsabschnitt (11) des Verankerungselements (4) mit mindestens einem Verbindungselement bereitgestellt ist, das mindestens ein Loch (21), bevorzugt ein Durchgangsloch, umfasst, das in dem ringförmigen Kopplungsabschnitt (11) gebildet ist, und dazu konfiguriert ist, die Integration des ringförmigen Kopplungsabschnitts (11) mit dem ersten Abschnitt des Reifens (1), der die Innenfläche (1a) definiert, und/oder mit dem zweiten Abschnitt des Reifens (1), der in Bezug auf den ersten Abschnitt radial außen angeordnet ist, zu fördern.

4. Reifen (1) für Fahrzeugräder nach Anspruch 1, wobei die im Wesentlichen rippenförmigen Kopplungsabschnitte (27) des Verankerungselements (4) verjüngt sind.

5. Reifen (1) für Fahrzeugräder nach Anspruch 1 oder 2, wobei der ringförmige Kopplungsabschnitt (11; 27) oder die im Wesentlichen rippenförmigen Kopplungsabschnitte des Verankerungselements (4) mit mindestens einem Verbindungselement bereitgestellt sind, das dazu konfiguriert ist, die Integration des ringförmigen Kopplungsabschnitts (11) oder der im Wesentlichen rippenförmigen Kopplungsabschnitte (27) mit dem ersten Abschnitt des Reifens (1), der die Innenfläche (1a) definiert, und/oder mit dem zweiten Abschnitt des Reifens (1), der in Bezug auf den ersten Abschnitt radial außen angeordnet ist, zu fördern.

6. Reifen (1) für Fahrzeugräder nach Anspruch 5, wobei das mindestens eine Verbindungselement mindestens ein Loch (21), bevorzugt ein Durchgangsloch, umfasst, das in dem ringförmigen Kopplungsabschnitt (11) oder in den im Wesentlichen rippenförmigen Kopplungsabschnitten (27) gebildet ist.

7. Reifen (1) für Fahrzeugräder nach einem der vorstehenden Ansprüche, wobei das Verankerungselement (4) an dem mindestens einen Kopplungsabschnitt (11; 27) des zentralen Körpers (9) eine Quererstreckung aufweist, die zwischen dem 1,5- und 3-fachen der Quererstreckung der Basis (9a) des zentralen Körpers (9) liegt.

8. Reifen (1) für Fahrzeugräder nach einem der vorstehenden Ansprüche, wobei der zentrale Körper (9) des Verankerungselements (4) eine Dicke aufweist, die zwischen 4 und 8 mm liegt.

9. Reifen (1) für Fahrzeugräder nach einem der vorstehenden Ansprüche, umfassend einen Gegenstand (5), der in dem Aufnahmesitz (10) des Gegenstands (5) befestigt ist, der in dem zentralen Körper (9) des Verankerungselements (4) definiert ist.

10. Reifen (1) für Fahrzeugräder nach einem der vorstehenden Ansprüche, wobei der Gegenstand (5) ausgewählt ist aus: einer Überwachungsvorrichtung, die einen Sensor beinhaltet, einem Ausgleichsgewicht, einem Element zur Befestigung an einer Oberfläche, einem Körper zur Verwendung des Reifens in Notlaufbedingungen, einer schallabsorbierenden elektronischen/mechanischen Vorrichtung.

11. Reifen (1) nach einem der vorstehenden Ansprüche, wobei das mindestens eine Verankerungselement (4) mindestens teilweise in den ersten Abschnitt des Reifens (1) in einem Bereich der Innenfläche (1a) gegenüber einem Laufflächenband (2) des Reifens (1) eingearbeitet ist.

12. Reifen (1) nach einem der vorstehenden Ansprüche, wobei der erste Abschnitt des Reifens (1) mindestens ein Strukturelement des Reifens (1) zwischen Einlage (3), Unterlage und Karkassenstruktur umfasst.

13. Montagegruppe (23) in einem Reifen (1) für Fahrzeugräder eines Verankerungselements (4), das dazu konfiguriert ist, einen Gegenstand (5) an der Innenfläche (1a) des Reifens (1) zu befestigen, wobei die Montagegruppe (23) umfasst:
a) ein Verankerungselement (4), das dazu konfiguriert ist, mindestens teilweise in einen Abschnitt des Reifens (1) eingearbeitet zu sein, der eine Innenfläche (1a) des Reifens (1) definiert, umfassend:
a1) einen zentralen Körper (9), der mit einer Basis (9a) bereitgestellt ist,
a2) einen Sitz (10), der in dem zentralen Körper (9) definiert ist und dazu konfiguriert ist, den Gegenstand (5) mindestens teilweise aufzunehmen, wobei der Sitz (10) mit einem ersten mechanischen Kopplungselement (12) bereitgestellt ist, das dazu konfiguriert ist, mit einem zweiten mechanischen Kopplungselement (13) zusammenzuwirken, das mit dem Gegenstand (5) verknüpft ist, um den Gegenstand (5) an dem Verankerungselement (4) zu befestigen,
a3) mindestens einen Kopplungsabschnitt (11; 27) des zentralen Körpers (9), der dazu konfiguriert ist, den Körper an den Reifen (1) zu koppeln, wobei der Kopplungsabschnitt (11; 27) quer von der Basis (9a) des zentralen Körpers (9) vorsteht,
b) eine erste Stützfolie (24), die mindestens eine Schicht umfasst, die ein vulkanisierbares Polymer umfasst, und
c) eine zweite Deckfolie (25), die mindestens eine Schicht umfasst, die ein vulkanisierbares Polymer umfasst, wobei die zweite Deckfolie (25) mit einer Durchgangsöffnung (26) bereitgestellt ist, die eine Form aufweist, die im Wesentlichen zu der des Sitzes (10) passt, der in dem zentralen Körper (9) des Verankerungselements (4) definiert ist,
wobei das Verankerungselement (4) eine Vielzahl von Kopplungsabschnitten (27) des zentralen Körpers (9) umfasst, die im Wesentlichen rippenförmig sind und quer und umlaufend von der Basis (9a) des zentralen Körpers (9) vorstehen, und
wobei das Verankerungselement (4) zwischen der ersten Stützfolie (24) und der zweiten Deckfolie (25) so angeordnet ist, dass es:
- den Sitz (10), der in dem zentralen Körper (9) definiert ist, an der Durchgangsöffnung (26) der zweiten Deckfolie (25) anordnet, und
- den Kopplungsabschnitt (11; 27), der quer von der Basis (9a) des zentralen Körpers (9) vorsteht, zwischen und in Kontakt mit der ersten Stützfolie (24) und der zweiten Deckfolie (25) anordnet.

14. Montagegruppe (23) in einem Reifen (1) für Fahrzeugräder eines Verankerungselements (4), das dazu konfiguriert ist, einen Gegenstand (5) an der Innenfläche (1a) des Reifens (1) zu befestigen, wobei die Montagegruppe (23) umfasst:
a) ein Verankerungselement (4), das dazu konfiguriert ist, mindestens teilweise in einen Abschnitt des Reifens (1) eingearbeitet zu sein, der eine Innenfläche (1a) des Reifens (1) definiert, umfassend:
a1) einen zentralen Körper (9), der mit einer Basis (9a) bereitgestellt ist,
a2) einen Sitz (10), der in dem zentralen Körper (9) definiert ist und dazu konfiguriert ist, den Gegenstand (5) mindestens teilweise aufzunehmen, wobei der Sitz (10) mit einem ersten mechanischen Kopplungselement (12) bereitgestellt ist, das dazu konfiguriert ist, mit einem zweiten mechanischen Kopplungselement (13) zusammenzuwirken, das mit dem Gegenstand (5) verknüpft ist, um den Gegenstand (5) an dem Verankerungselement (4) zu befestigen,
a3) mindestens einen Kopplungsabschnitt (11; 27) des zentralen Körpers (9), der dazu konfiguriert ist, den Körper an den Reifen (1) zu koppeln, wobei der Kopplungsabschnitt (11; 27) quer von der Basis (9a) des zentralen Körpers (9) vorsteht,
b) eine erste Stützfolie (24), die mindestens eine Schicht umfasst, die ein vulkanisierbares Polymer umfasst, und
c) eine zweite Deckfolie (25), die mindestens eine Schicht umfasst, die ein vulkanisierbares Polymer umfasst, wobei die zweite Deckfolie (25) mit einer Durchgangsöffnung (26) bereitgestellt ist, die eine Form aufweist, die im Wesentlichen zu der des Sitzes (10) passt, der in dem zentralen Körper (9) des Verankerungselements (4) definiert ist,
wobei der mindestens eine Kopplungsabschnitt (11; 27), der quer von der Basis (9a) des zentralen Körpers (9) des Verankerungselements (4) vorsteht, einen ringförmigen Kopplungsabschnitt (11) umfasst, der umlaufend von der Basis (9a) des zentralen Körpers (9) vorsteht,
wobei der ringförmige Kopplungsabschnitt (11) verjüngt ist, und
wobei das Verankerungselement (4) zwischen der ersten Stützfolie (24) und der zweiten Deckfolie (25) so angeordnet ist, dass es:
- den Sitz (10), der in dem zentralen Körper (9) definiert ist, an der Durchgangsöffnung (26) der zweiten Deckfolie (25) anordnet, und
- den Kopplungsabschnitt (11; 27), der quer von der Basis (9a) des zentralen Körpers (9) vorsteht, zwischen und in Kontakt mit der ersten Stützfolie (24) und der zweiten Deckfolie (25) anordnet.

15. Montagegruppe (23) in einem Reifen (1) für Fahrzeugräder eines Verankerungselements (4), das dazu konfiguriert ist, einen Gegenstand (5) an der Innenfläche (1a) des Reifens (1) zu befestigen, wobei die Montagegruppe (23) umfasst:
a) ein Verankerungselement (4), das dazu konfiguriert ist, mindestens teilweise in einen Abschnitt des Reifens (1) eingearbeitet zu sein, der eine Innenfläche (1a) des Reifens (1) definiert, umfassend:
a1) einen zentralen Körper (9), der mit einer Basis (9a) bereitgestellt ist,
a2) einen Sitz (10), der in dem zentralen Körper (9) definiert ist und dazu konfiguriert ist, den Gegenstand (5) mindestens teilweise aufzunehmen, wobei der Sitz (10) mit einem ersten mechanischen Kopplungselement (12) bereitgestellt ist, das dazu konfiguriert ist, mit einem zweiten mechanischen Kopplungselement (13) zusammenzuwirken, das mit dem Gegenstand (5) verknüpft ist, um den Gegenstand (5) an dem Verankerungselement (4) zu befestigen,
a3) mindestens einen Kopplungsabschnitt (11; 27) des zentralen Körpers (9), der dazu konfiguriert ist, den Körper an den Reifen (1) zu koppeln, wobei der Kopplungsabschnitt (11; 27) quer von der Basis (9a) des zentralen Körpers (9) vorsteht,
b) eine erste Stützfolie (24), die mindestens eine Schicht umfasst, die ein vulkanisierbares Polymer umfasst, und
c) eine zweite Deckfolie (25), die mindestens eine Schicht umfasst, die ein vulkanisierbares Polymer umfasst, wobei die zweite Deckfolie (25) mit einer Durchgangsöffnung (26) bereitgestellt ist, die eine Form aufweist, die im Wesentlichen zu der des Sitzes (10) passt, der in dem zentralen Körper (9) des Verankerungselements (4) definiert ist,
wobei der mindestens eine Kopplungsabschnitt (11; 27), der quer von der Basis (9a) des zentralen Körpers (9) des Verankerungselements (4) vorsteht, einen ringförmigen Kopplungsabschnitt (11) umfasst, der umlaufend von der Basis (9a) des zentralen Körpers (9) vorsteht,
wobei der ringförmige Kopplungsabschnitt (11) des Verankerungselements (4) mit mindestens einem Verbindungselement bereitgestellt ist, das mindestens ein Loch (21), bevorzugt ein Durchgangsloch, umfasst, das in dem ringförmigen Kopplungsabschnitt (11) gebildet ist, und dazu konfiguriert ist, die Integration des ringförmigen Kopplungsabschnitts (11) mit dem ersten Abschnitt des Reifens (1), der die Innenfläche (1a) definiert, und/oder mit dem zweiten Abschnitt des Reifens (1), der in Bezug auf den ersten Abschnitt radial außen angeordnet ist, zu fördern,
und
wobei das Verankerungselement (4) zwischen der ersten Stützfolie (24) und der zweiten Deckfolie (25) so angeordnet ist, dass es:
- den Sitz (10), der in dem zentralen Körper (9) definiert ist, an der Durchgangsöffnung (26) der zweiten Deckfolie (25) anordnet, und
- den Kopplungsabschnitt (11; 27), der quer von der Basis (9a) des zentralen Körpers (9) vorsteht, zwischen und in Kontakt mit der ersten Stützfolie (24) und der zweiten Deckfolie (25) anordnet.

16. Montagegruppe (23) nach Anspruch 13 oder 14, wobei der ringförmige Kopplungsabschnitt (11) oder die im Wesentlichen rippenförmigen Kopplungsabschnitte (27) des Verankerungselements (4) mit mindestens einem Verbindungselement bereitgestellt sind, das dazu konfiguriert ist, die Integration des ringförmigen Kopplungsabschnitts (11) oder der im Wesentlichen rippenförmigen Kopplungsabschnitte (27) mit dem ersten Abschnitt des Reifens (1), der die Innenfläche (1a) definiert, und/oder mit dem zweiten Abschnitt des Reifens (1), der in Bezug auf den ersten Abschnitt radial außen angeordnet ist, zu fördern.

17. Montagegruppe (23) nach Anspruch 16, wobei das mindestens eine Verbindungselement mindestens ein Loch (21), bevorzugt ein Durchgangsloch, umfasst, das in dem ringförmigen Kopplungsabschnitt (11) oder in den im Wesentlichen rippenförmigen Kopplungsabschnitten (27) gebildet ist.

18. Montagegruppe (23) nach Anspruch 13, wobei die im Wesentlichen rippenförmigen Kopplungsabschnitte (27) des Verankerungselements (4) verjüngt sind.

19. Montagegruppe (23) nach einem der Ansprüche 13-18, wobei das Verankerungselement (4) wie in einem der Ansprüche 7 oder 8 definiert ist.

20. Montagegruppe (23) nach einem der Ansprüche 13-19, wobei die mindestens eine Schicht, die ein vulkanisierbares Polymer der ersten Stützfolie (24) und/oder der zweiten Deckfolie (25) umfasst, eine Vielzahl von länglichen Verstärkungselementen umfasst.

21. Montagegruppe (23) nach einem der Ansprüche 13-20, wobei die zweite Deckfolie (25) eine Querabmessung gleich oder größer als die Querabmessung der ersten Stützfolie (24) aufweist.

22. Montagegruppe (23) nach einem der Ansprüche 13-21, wobei die erste Stützfolie (24) eine Dicke zwischen 0,2 und 0,5 mm aufweist.

23. Montagegruppe (23) nach einem der Ansprüche 13-22, wobei die zweite Deckfolie (25) eine Dicke zwischen 0,5 und 1,3 mm aufweist.

24. Montagegruppe (23) nach einem der Ansprüche 13-23, die eine maximale Dicke am zentralen Körper (9) des Verankerungselements (4) zwischen 4,8 und 8,8 mm aufweist.

25. Prozess zum Herstellen eines Reifens (1) für Fahrzeugräder, umfassend ein Verankerungselement (4) eines Gegenstands (5) an einer Innenfläche (1a) davon nach einem der Ansprüche 1-12, wobei der Prozess die folgenden Schritte umfasst:
a) Bereitstellen einer Montagegruppe (23) nach einem der Ansprüche 13-24;
b) Aufbringen der Montagegruppe (23) auf eine radial innere Fläche (1a) einer radial inneren Komponente eines Rohreifens (1);
c) Unterziehen des so erhaltenen Rohreifens (1) einer Vulkanisation, um die Montagegruppe (23) in einen ersten Abschnitt des Reifens zu integrieren, der die Innenfläche (1a) des Reifens (1) definiert, sodass das Verankerungselement (4) der Montagegruppe (23) mindestens teilweise in den ersten Abschnitt des Reifens (1) eingearbeitet ist.

## Revendications

1. Pneu (1) pour roues de véhicule comprenant une surface intérieure (1a) et au moins un élément d'ancrage (4) configuré pour fixer un objet (5) à ladite surface intérieure (1a),
dans lequel l'élément d'ancrage (4) est au moins partiellement incorporé dans une première partie du pneu (1) définissant ladite surface intérieure (1a) et est accessible depuis ladite surface intérieure (1a) ;
dans lequel l'élément d'ancrage (4) comprend :
i) un corps central (9), pourvu d'une base (9a),
ii) un siège (10), défini dans le corps central (9), configuré pour loger au moins partiellement ledit objet (5), ledit siège (10) étant pourvu d'un premier élément de couplage mécanique (12) configuré pour coopérer avec un second élément de couplage mécanique (13) associé audit objet (5) de manière à fixer ledit objet (5) à l'élément d'ancrage (4) ;
iii) au moins une partie de couplage (11 ; 27) du corps central (9) au pneu (1), et
dans lequel ladite partie de couplage (11 ; 27) fait saillie de manière transversale à partir de la base (9a) du corps central (9) et est interposée entre et en contact avec ladite première partie du pneu (1) définissant la surface intérieure (1a) du pneu (1) et avec une seconde partie du pneu (1) radialement extérieure par rapport à ladite première partie,
**caractérisé en ce que**
l'élément d'ancrage (4) comprend une pluralité de parties de couplage (27) du corps central (9) sensiblement en forme d'ailette et faisant saillie de manière transversale et périmétrique à partir de la base (9a) du corps central (9).

2. Pneu (1) pour roues de véhicule comprenant une surface intérieure (1a) et au moins un élément d'ancrage (4) configuré pour fixer un objet (5) à ladite surface intérieure (1a),
dans lequel l'élément d'ancrage (4) est au moins partiellement incorporé dans une première partie du pneu (1) définissant ladite surface intérieure (1a) et est accessible depuis ladite surface intérieure (1a) ;
dans lequel l'élément d'ancrage (4) comprend :
i) un corps central (9), pourvu d'une base (9a),
ii) un siège (10), défini dans le corps central (9), configuré pour loger au moins partiellement ledit objet (5), ledit siège (10) étant pourvu d'un premier élément de couplage mécanique (12) configuré pour coopérer avec un second élément de couplage mécanique (13) associé audit objet (5) de manière à fixer ledit objet (5) à l'élément d'ancrage (4) ;
iii) au moins une partie de couplage (11 ; 27) du corps central (9) au pneu (1), et
dans lequel ladite partie de couplage (11 ; 27) :
i) fait saillie de manière transversale à partir de la base (9a) du corps central (9) ;
ii) comprend une partie de couplage en forme d'anneau (11) faisant saillie de manière périmétrique à partir de la base (9a) du corps central (9) ; et
iii) est interposé entre et en contact avec ladite première partie du pneu (1) définissant la surface intérieure (1a) du pneu (1) et avec une seconde partie du pneu (1) radialement extérieure par rapport à ladite première partie,
**caractérisé en ce que** ladite partie de couplage en forme d'anneau (11) est conique.

3. Pneu (1) pour roues de véhicule comprenant une surface intérieure (1a) et au moins un élément d'ancrage (4) configuré pour fixer un objet (5) à ladite surface intérieure (1a),
dans lequel l'élément d'ancrage (4) est au moins partiellement incorporé dans une première partie du pneu (1) définissant ladite surface intérieure (1a) et est accessible depuis ladite surface intérieure (1a) ;
dans lequel l'élément d'ancrage (4) comprend :
i) un corps central (9), pourvu d'une base (9a),
ii) un siège (10), défini dans le corps central (9), configuré pour loger au moins partiellement ledit objet (5), ledit siège (10) étant pourvu d'un premier élément de couplage mécanique (12) configuré pour coopérer avec un second élément de couplage mécanique (13) associé audit objet (5) de manière à fixer ledit objet (5) à l'élément d'ancrage (4) ;
iii) au moins une partie de couplage (11 ; 27) du corps central (9) au pneu (1), et
dans lequel ladite partie de couplage (11 ; 27) :
i) fait saillie de manière transversale à partir de la base (9a) du corps central (9) ;
ii) comprend une partie de couplage en forme d'anneau (11) faisant saillie de manière périmétrique à partir de la base (9a) du corps central (9) ; et
iii) est interposé entre et en contact avec ladite première partie du pneu (1) définissant la surface intérieure (1a) du pneu (1) et avec une seconde partie du pneu (1) radialement extérieure par rapport à ladite première partie,
**caractérisé en ce que** ladite partie de couplage en forme d'anneau (11) de l'élément d'ancrage (4) est pourvue d'au moins un élément de liaison comprenant au moins un trou (21), de préférence un trou traversant, formé dans ladite partie de couplage en forme d'anneau (11), et configuré pour favoriser l'intégration de ladite partie de couplage en forme d'anneau (11) avec la première partie du pneu (1) définissant la surface intérieure (1a) et/ou avec la seconde partie du pneu (1) radialement extérieure par rapport à la première partie.

4. Pneu (1) pour roues de véhicule selon la revendication 1, dans lequel lesdites parties de couplage sensiblement en forme d'ailette (27) de l'élément d'ancrage (4) sont coniques.

5. Pneu (1) pour roues de véhicule selon la revendication 1 ou 2, dans lequel ladite partie de couplage en forme d'anneau (11 ; 27) ou lesdites parties de couplage sensiblement en forme d'ailette de l'élément d'ancrage (4) sont pourvues d'au moins un élément de liaison configuré pour favoriser l'intégration de ladite partie de couplage en forme d'anneau (11) ou desdites parties de couplage sensiblement en forme d'ailette (27) avec la première partie du pneu (1) définissant la surface intérieure (1a) et/ou avec la seconde partie du pneu (1) radialement extérieure par rapport à la première partie.

6. Pneu (1) pour roues de véhicule selon la revendication 5, dans lequel ledit au moins un élément de liaison comprend au moins un trou (21), de préférence un trou traversant, formé dans ladite partie de couplage en forme d'anneau (11) ou dans lesdites parties de couplage sensiblement en forme d'ailette (27).

7. Pneu (1) pour roues de véhicule selon l'une quelconque des revendications précédentes, dans lequel l'élément d'ancrage (4) présente, au niveau de ladite au moins une partie de couplage (11 ; 27) du corps central (9), une extension transversale comprise entre 1,5 et 3 fois l'extension transversale de la base (9a) du corps central (9).

8. Pneu (1) pour roues de véhicule selon l'une quelconque des revendications précédentes, dans lequel le corps central (9) de l'élément d'ancrage (4) présente une épaisseur comprise entre 4 et 8 mm.

9. Pneu (1) pour roues de véhicule selon l'une quelconque des revendications précédentes, comprenant un objet (5) fixé dans ledit siège de logement (10) dudit objet (5) défini dans le corps central (9) de l'élément d'ancrage (4).

10. Pneu (1) pour roues de véhicule selon l'une quelconque des revendications précédentes, dans lequel ledit objet (5) est choisi parmi : un dispositif de surveillance incluant un capteur, une masse d'équilibrage, un élément de fixation de surface, un corps pour l'utilisation du pneu dans des conditions de « roulage à plat », un dispositif électronique/mécanique absorbant le bruit.

11. Pneu (1) selon l'une quelconque des revendications précédentes, dans lequel ledit au moins un élément d'ancrage (4) est au moins partiellement incorporé dans ladite première partie du pneu (1) dans une zone de ladite surface intérieure (1a) opposée à une bande de roulement (2) du pneu (1).

12. Pneu (1) selon l'une quelconque des revendications précédentes, dans lequel ladite première partie du pneu (1) comprend au moins un élément structurel du pneu (1) parmi le revêtement (3), la sous-couche et la structure de carcasse.

13. Groupe d'assemblage (23) dans un pneu (1) pour roues de véhicule d'un élément d'ancrage (4) configuré pour fixer un objet (5) à ladite surface intérieure (1a) du pneu (1), dans lequel le groupe d'assemblage (23) comprend :
a) un élément d'ancrage (4) configuré pour être au moins partiellement incorporé dans une partie du pneu (1) définissant une surface intérieure (1a) du pneu (1), comprenant :
a1) un corps central (9), pourvu d'une base (9a),
a2) un siège (10), défini dans le corps central (9), configuré pour loger au moins partiellement ledit objet (5), ledit siège (10) étant pourvu d'un premier élément de couplage mécanique (12) configuré pour coopérer avec un second élément de couplage mécanique (13) associé audit objet (5) de manière à fixer ledit objet (5) à l'élément d'ancrage (4),
a3) au moins une partie de couplage (11 ; 27) du corps central (9) configurée pour coupler ledit corps au pneu (1), ladite partie de couplage (11 ; 27) faisant saillie de manière transversale à partir de la base (9a) du corps central (9),
b) une première feuille de support (24) comprenant au moins une couche comprenant un polymère vulcanisable, et
c) une seconde feuille de revêtement (25), comprenant au moins une couche comprenant un polymère vulcanisable, ladite seconde feuille de revêtement (25) étant pourvue d'une ouverture traversante (26) présentant une forme correspondant sensiblement au siège (10) défini dans le corps central (9) de l'élément d'ancrage (4),
dans lequel l'élément d'ancrage (4) comprend une pluralité de parties de couplage (27) du corps central (9) sensiblement en forme d'ailette et faisant saillie de manière transversale et périmétrique à partir de la base (9a) du corps central (9), et
dans lequel l'élément d'ancrage (4) est disposé entre ladite première feuille de support (24) et ladite seconde feuille de revêtement (25) de manière à :
- disposer le siège (10) défini dans le corps central (9) au niveau de l'ouverture traversante (26) de la seconde feuille de revêtement (25), et
- disposer la partie de couplage (11 ; 27) faisant saillie de manière transversale à partir de la base (9a) du corps central (9) entre et en contact avec la première feuille de support (24) et la seconde feuille de revêtement (25).

14. Groupe d'assemblage (23) dans un pneu (1) pour roues de véhicule d'un élément d'ancrage (4) configuré pour fixer un objet (5) à ladite surface intérieure (1a) du pneu (1), dans lequel le groupe d'assemblage (23) comprend :
a) un élément d'ancrage (4) configuré pour être au moins partiellement incorporé dans une partie du pneu (1) définissant une surface intérieure (1a) du pneu (1), comprenant :
a1) un corps central (9), pourvu d'une base (9a),
a2) un siège (10), défini dans le corps central (9), configuré pour loger au moins partiellement ledit objet (5), ledit siège (10) étant pourvu d'un premier élément de couplage mécanique (12) configuré pour coopérer avec un second élément de couplage mécanique (13) associé audit objet (5) de manière à fixer ledit objet (5) à l'élément d'ancrage (4),
a3) au moins une partie de couplage (11 ; 27) du corps central (9) configurée pour coupler ledit corps au pneu (1), ladite partie de couplage (11 ; 27) faisant saillie de manière transversale à partir de la base (9a) du corps central (9),
b) une première feuille de support (24) comprenant au moins une couche comprenant un polymère vulcanisable, et
c) une seconde feuille de revêtement (25), comprenant au moins une couche comprenant un polymère vulcanisable, ladite seconde feuille de revêtement (25) étant pourvue d'une ouverture traversante (26) présentant une forme correspondant sensiblement au siège (10) défini dans le corps central (9) de l'élément d'ancrage (4),
dans lequel ladite au moins une partie de couplage (11 ; 27) faisant saillie de manière transversale à partir de la base (9a) du corps central (9) de l'élément d'ancrage (4) comprend une partie de couplage en forme d'anneau (11) faisant saillie de manière périphérique à partir de la base (9a) du corps central (9),
dans lequel ladite partie de couplage en forme d'anneau (11) est conique, et
dans lequel l'élément d'ancrage (4) est disposé entre ladite première feuille de support (24) et ladite seconde feuille de revêtement (25) de manière à :
- disposer le siège (10) défini dans le corps central (9) au niveau de l'ouverture traversante (26) de la seconde feuille de revêtement (25), et
- disposer la partie de couplage (11 ; 27) faisant saillie de manière transversale à partir de la base (9a) du corps central (9) entre et en contact avec la première feuille de support (24) et la seconde feuille de revêtement (25).

15. Groupe d'assemblage (23) dans un pneu (1) pour roues de véhicule d'un élément d'ancrage (4) configuré pour fixer un objet (5) à ladite surface intérieure (1a) du pneu (1), dans lequel le groupe d'assemblage (23) comprend :
a) un élément d'ancrage (4) configuré pour être au moins partiellement incorporé dans une partie du pneu (1) définissant une surface intérieure (1a) du pneu (1), comprenant :
a1) un corps central (9), pourvu d'une base (9a),
a2) un siège (10), défini dans le corps central (9), configuré pour loger au moins partiellement ledit objet (5), ledit siège (10) étant pourvu d'un premier élément de couplage mécanique (12) configuré pour coopérer avec un second élément de couplage mécanique (13) associé audit objet (5) de manière à fixer ledit objet (5) à l'élément d'ancrage (4),
a3) au moins une partie de couplage (11 ; 27) du corps central (9) configurée pour coupler ledit corps au pneu (1), ladite partie de couplage (11 ; 27) faisant saillie de manière transversale à partir de la base (9a) du corps central (9),
b) une première feuille de support (24) comprenant au moins une couche comprenant un polymère vulcanisable, et
c) une seconde feuille de revêtement (25), comprenant au moins une couche comprenant un polymère vulcanisable, ladite seconde feuille de revêtement (25) étant pourvue d'une ouverture traversante (26) présentant une forme correspondant sensiblement au siège (10) défini dans le corps central (9) de l'élément d'ancrage (4),
dans lequel ladite au moins une partie de couplage (11 ; 27) faisant saillie de manière transversale à partir de la base (9a) du corps central (9) de l'élément d'ancrage (4) comprend une partie de couplage en forme d'anneau (11) faisant saillie de manière périphérique à partir de la base (9a) du corps central (9),
dans lequel ladite partie de couplage en forme d'anneau (11) de l'élément d'ancrage (4) est pourvue d'au moins un élément de liaison comprenant au moins un trou (21), de préférence un trou traversant, formé dans ladite partie de couplage en forme d'anneau (11), et configuré pour favoriser l'intégration de ladite partie de couplage en forme d'anneau (11) avec la première partie du pneu (1) définissant la surface intérieure (1a) et/ou avec la seconde partie du pneu (1) radialement extérieure par rapport à la première partie,
et
dans lequel l'élément d'ancrage (4) est disposé entre ladite première feuille de support (24) et ladite seconde feuille de revêtement (25) de manière à :
- disposer le siège (10) défini dans le corps central (9) au niveau de l'ouverture traversante (26) de la seconde feuille de revêtement (25), et
- disposer la partie de couplage (11 ; 27) faisant saillie de manière transversale à partir de la base (9a) du corps central (9) entre et en contact avec la première feuille de support (24) et la seconde feuille de revêtement (25).

16. Groupe d'assemblage (23) selon la revendication 13 ou 14, dans lequel ladite partie de couplage en forme d'anneau (11) ou lesdites parties de couplage sensiblement en forme d'ailette (27) de l'élément d'ancrage (4) sont pourvues d'au moins un élément de liaison configuré pour favoriser l'intégration de ladite partie de couplage en forme d'anneau (11) ou desdites parties de couplage sensiblement en forme d'ailette (27) avec la première partie du pneu (1) définissant la surface intérieure (1a) et/ou avec la seconde partie du pneu (1) radialement extérieure par rapport à la première partie.

17. Groupe d'assemblage (23) selon la revendication 16, dans lequel ledit au moins un élément de liaison comprend au moins un trou (21), de préférence un trou traversant, formé dans ladite partie de couplage en forme d'anneau (11) ou dans lesdites parties de couplage sensiblement en forme d'ailette (27).

18. Groupe d'assemblage (23) selon la revendication 13, dans lequel lesdites parties de couplage sensiblement en forme d'ailette (27) de l'élément d'ancrage (4) sont coniques.

19. Groupe d'assemblage (23) selon l'une quelconque des revendications 13-18, dans lequel ledit élément d'ancrage (4) est tel que défini dans l'une quelconque des revendications 7 ou 8.

20. Groupe d'assemblage (23) selon l'une quelconque des revendications 13-19, dans lequel ladite au moins une couche comprenant un polymère vulcanisable de la première feuille de support (24) et/ou de la seconde feuille de revêtement (25) comprend une pluralité d'éléments de renfort allongés.

21. Groupe d'assemblage (23) selon l'une quelconque des revendications 13-20, dans lequel la seconde feuille de revêtement (25) présente une dimension transversale égale ou supérieure à la dimension transversale de la première feuille de support (24).

22. Groupe d'assemblage (23) selon l'une quelconque des revendications 13-21, dans lequel la première feuille de support (24) présente une épaisseur comprise entre 0,2 et 0,5 mm.

23. Groupe d'assemblage (23) selon l'une quelconque des revendications 13-22, dans lequel la seconde feuille de revêtement (25) présente une épaisseur comprise entre 0,5 et 1,3 mm.

24. Groupe d'assemblage (23) selon l'une quelconque des revendications 13-23, présentant une épaisseur maximale au niveau du corps central (9) de l'élément d'ancrage (4) comprise entre 4,8 et 8,8 mm.

25. Processus de production d'un pneu (1) pour roues de véhicule comprenant un élément d'ancrage (4) d'un objet (5) sur une surface intérieure (1a) de celui-ci selon l'une quelconque des revendications 1-12, dans lequel le processus comprend les étapes consistant à :
a) fournir un groupe d'assemblage (23) selon l'une quelconque des revendications 13-24 ;
b) appliquer ledit groupe d'assemblage (23) sur une surface radialement intérieure (1a) d'un composant radialement intérieur d'un pneu cru (1) ;
c) soumettre le pneu cru (1) ainsi obtenu à une vulcanisation de manière à intégrer le groupe d'assemblage (23) dans une première partie du pneu définissant la surface intérieure (1a) du pneu (1) de sorte que l'élément d'ancrage (4) du groupe d'assemblage (23) soit au moins partiellement incorporé dans ladite première partie du pneu (1).
